(19) Europäisches Patentamt / European Patent Office / Office européen des brevets

(11) **EP 4 535 212 A1**

(12) **EUROPEAN PATENT APPLICATION**

(43) Date of publication:
**09.04.2025 Bulletin 2025/15**

(21) Application number: **23306680.2**

(22) Date of filing: **02.10.2023**

(51) International Patent Classification (IPC):
**G06F 30/12** (2020.01) **G06F 30/17** (2020.01)
**G06T 17/20** (2006.01) **G06T 17/30** (2006.01)
**G06F 111/04** (2020.01) **G06F 119/18** (2020.01)

(52) Cooperative Patent Classification (CPC):
**G06T 17/30; G06F 30/12; G06F 30/15; G06F 30/17;**
G06F 2111/04; G06F 2119/18; G06T 2210/32

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Dassault Systèmes**
**78140 Vélizy-Villacoublay (FR)**

(72) Inventor: **LETZELTER, Frédéric**
**78140 Vélizy-Villacoublay (FR)**

(74) Representative: **Bandpay & Greuter**
**11 rue Christophe Colomb**
**75008 Paris (FR)**

(54) **SUBDIVISION CURVE DEFORMATION**

(57) The disclosure notably relates to a computer-implemented method for applying, to a given curve, a CAD deformation operator. The given curve results from a conversion of a corresponding subdivision curve defined by a base mesh into a computer-aided design (CAD) curve format. The CAD deformation operator is configured to deform an input CAD object so as to create a contact geometrical relation with another CAD object. The method comprises converting the given curve into a format readable by the CAD deformation operator. The method further comprises applying the CAD deformation operator to the converted given curve. The method further comprises converting back the result of applying the CAD deformation operator into the CAD curve format.

EP 4 535 212 A1

## Description

## TECHNICAL FIELD

The disclosure relates to the field of computer programs and systems, and more specifically to a method, system and program for subdivision curve deformation.

## BACKGROUND

A number of solutions, hardware and software, are offered on the market for the design, the engineering and the manufacturing of objects. CAD is an acronym for Computer-Aided Design, e.g. it relates to software solutions for designing an object. CAE is an acronym for Computer-Aided Engineering, e.g. it relates to software solutions for analyzing and simulating the physical behavior of a future product. CAM is an acronym for Computer-Aided Manufacturing, e.g. it relates to software solutions for defining product manufacturing processes and resources. In such computer-aided design solutions, the graphical user interface plays an important role as regards the efficiency of the technique. These techniques may be embedded within Product Lifecycle Management (PLM) solutions. PLM refers to an engineering strategy that helps companies to share product data, apply common processes, and leverage corporate knowledge for the development of products from conception to the end of their life, across the concept of extended enterprise. The PLM solutions provided by Dassault Systèmes (under the trademarks CATIA, SIMULIA, DELMIA and ENOVIA) provide an Engineering Hub, which organizes product engineering knowledge, a Manufacturing Hub, which manages manufacturing engineering knowledge, and an Enterprise Hub which enables enterprise integrations and connections into both the Engineering and Manufacturing Hubs. All together the solutions deliver common models linking products, processes, resources to enable dynamic, knowledge-based product creation and decision support that drives optimized product definition, manufacturing preparation, production and service.

Computer-aided design of a product to be manufactured may typically involve several stages. Class A modeling is a late stage of such process, for example the last stage before the model enters the computer-aided manufacturing (CAM) phase. Class A modeling uses CAD models (of products) that feature quality surfaces. That is, the CAD model, for example B-rep model, has an outer surface representing the outer surface portion of the product, and this outer surface has quality (general G2 continuity, also referred to as curvature continuity). At the end of Class A modeling, the CAD model may be in condition for a downstream manufacturing phase. That is, the model may be stored in or as a CAD file which may be then used in the CAM phase, for manufacturing. The surfaces of the model have sufficient quality for manufacturing and can thereby be manufactured by the appropriate machines. For example, such quality surfaces allow manufacturing by continuous application of a machining tool.

Class A surface may be created from curves using well known CAD features, such as fill, sweep, loft, net, extrusion and others. These curves are thus used to create surfaces and control them afterwards (*i.e.* once created). In modern CAD tools for Class A modeling, these curves comprise Bezier or NURBS curves, which allow the creation of tense curves with quality curvatures (G2 continuity). These curves give an ergonomic access to the surface, like a handle to create & deform the shapes. In Class A, quality of the curve is key, as leading to a quality surface. FIG.s 1 and 2 show examples a screenshots of Class A CAD models of cars each with an outer surface comprised of several quality surfaces defined by such quality curves.

In Class A modeling, complex curves may be created using several G2 connected Bezier curves. Each Bezier curve may typically be limited to an 11-15 order to avoid instability issues. Alternatively or additionally, NURBS curves with a high segmentation may be used. Bezier curves are known to provide a high quality resulting shape.

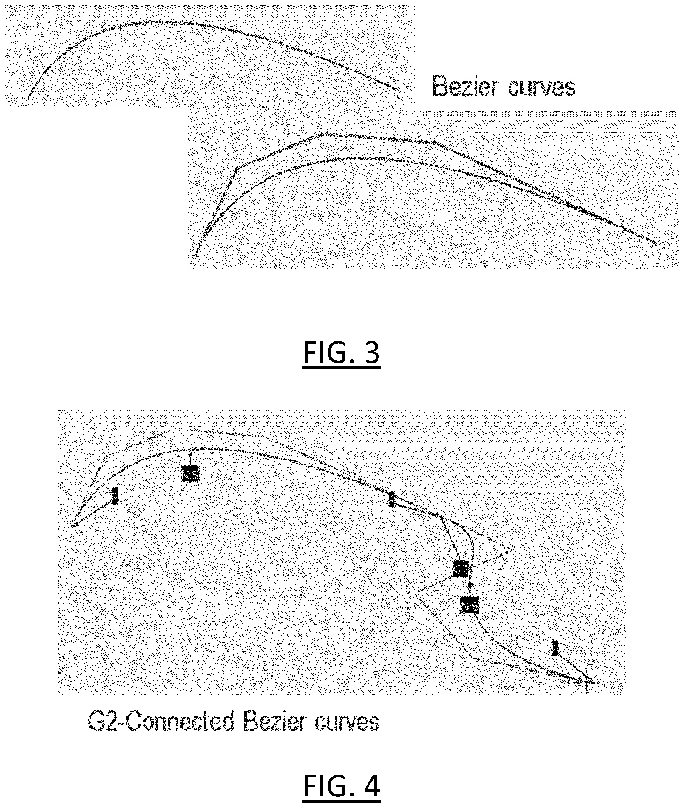

A single Bezier curve however limits the complexity of the shape (whereas the design may be complex due to manufacturing and/or mechanical constraints), such that in practice several Bezier curves must be connected to create complex shapes, thereby leading to numerous steps to generate clear surfaces. Furthermore, connections between Bezier curves need to be always checked by the user or guaranteed by the CAD system through constraints. This implies additional steps (user editions and/or computer calculations for enforcing constraints) and/or additional user-provided knowledge. This deteriorates ergonomics, speed, and efficiency (including computer efficiency) of the design process. FIG. 3 shows examples of Bezier curves, and FIG. 4 examples of G2-connected Bezier curves.

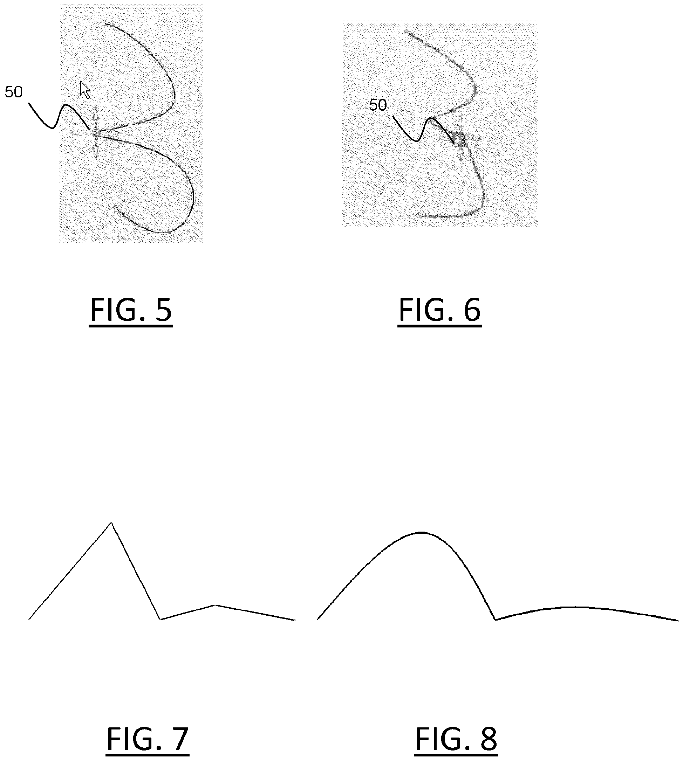

NURBS curves allow the creation of more complex shapes, but the possible complexity is however still too limited. Furthermore, manipulating arcs limits of NURBS can have a big influence very far on the curve. This implies that manipulating a part of the design through NURBS arc limit manipulation may impact another part of the design defined by the same NURBS curve, whereas this other part was not intended to me modified. This results in a lack of ergonomy, as many interactions are needed to perform the intended editions and correct the unintended editions, and/or very precise interactions are needed to perform editions that do not result in unintended modifications (this would require great hand precision and/or great high focus, thereby causing a great physiological burden on the designer). Moreover, while accessing to the control points network a lot of points are available leading to a high complexity to reach the desired shape. FIG. 5 shows a screenshot of a NURBS curve. Cursor 50 is placed on a control point and moved by the user, so as to move the control point to perform an edition. FIG. 6 shows the result of the move of the cursor 50, and as can be seen on FIG. 6, the move has unintendedly strongly modified parts of the curve which are located far away.

Prior to Class A modeling, or in early stages of Class A modeling, designers and manufactures may seek efficiency and productivity in the design. For that reason, the use of NURBS or Bezier curves in that context suffer from the shortcomings of these techniques which have been discussed hereinabove and which are discussed hereinbelow (manipulation complexity, large memory consumption, lack of computer efficiency). Furthermore, in that context designer need simplicity in the software product they are using.

Furthermore, in modern CAD software, subdivision surfaces are more and more used and constitute one of the most appropriate and interesting technology to create shapes, notably due to the simplicity of the subdivision surfaces and the fact that they are "global" (one surface can product complex shapes which cannot be produced using a single NURBS or Bezier surface). The bridge between these surfaces and curve-based design is essential in modern CAD. However, this bridge suffers from a lack of compatibility between these different technologies. Indeed, producing subdivision surfaces based on these classical NURBS or Bezier curves currently suffer from a lack of accuracy (for example, the presence of deviations as discussed hereinafter) due to the necessity to approximate these curves into base meshes. Despite the long existence of subdivision curves, these shortcomings have for now not been overcome.

Within this context, there exists a need for improved solutions for computer-aided designs using curves.

Such an improved solution is provided by European Patent Application n°EP23306674.5, filed by DASSAULT SYSTEMES on 02 October 2023. This European Patent Application discloses a computer-implemented method for converting a subdivision curve into a corresponding computer-aided design (CAD) curve format, a CAD model representing a product to be manufactured, and a method of use of the CAD model. The CAD model comprises at least a part defined by a subdivision curve and obtainable according to the conversion of the subdivision curve into a corresponding CAD curve format, the conversion being according to the method for converting a subdivision curve into a corresponding computer-aided design (CAD) curve format.

The solution proposed in European Patent Application n°EP23306674.5, notably allows to integrate and use subdivision curves in modern CAD software, and notably to feed them as input to most of known CAD operators. It is an object of the present disclosure to further improve the application of CAD operators to subdivision curves, and notably to provide solutions to apply CAD deformation operators to CAD objects defined by subdivision curves, including CAD curve formats stemming from the conversion method of European Patent Application n°EP23306674.5.

## SUMMARY

It is therefore provided a computer-implemented method for applying, to a given curve, a CAD deformation operator. The given curve results from a conversion of a corresponding subdivision curve defined by a base mesh into a computer-aided design (CAD) curve format. The CAD deformation operator is configured to deform an input CAD object so as to create a contact geometrical relation with another CAD object. The method comprises converting the given curve into a format readable by the CAD deformation operator. The method further comprises applying the CAD deformation operator to the converted given curve. The method further comprises converting back the result of applying the CAD deformation operator into the CAD curve format. The method may be referred to as "the deformation method".

The method may comprise one or more of the following:

- the given curve comprises unitary curves each pointed by an edge, and converting the given curve comprisesing concatenating given unitary curves of the given curve that are pointed by edges into one or more single NURBS curves;
- the unitary curves of the given curve are G2 continuous, the concatenation being thereby deviation-free;
- converting back the result of applying the CAD deformation operator into the CAD curve format comprises exploding the one or more NURBS curves each into unitary curves, the unitary curves resulting from the exploding corresponding to the given unitary curves;
- the number of unitary curves resulting from the exploding equals the number of given unitary curves;
- the method further comprises, prior to the converting:

   ◦ detecting sharp vertices in the base-mesh;
   ◦ identifying corresponding sharp vertices in the given curve;
   ◦ splitting the given curve according to the identified sharp vertices so as to split the given curve into curves each bounded by either two sharp vertices or one sharp vertex and a boundary vertex,

   the converting, applying and converting back being applied based on the curves resulting from the splitting;
- the operator is one of:

- ◦ matching operation to a curve ;
- ◦ matching operation to a 3D point;
- ◦ matching operation to a surface border;
- ◦ partial fitting operation to another curve;
- ◦ partial fitting operation to one or several surfaces;
- ◦ partial fitting operation to a polygon; or
- ◦ G2 symmetry in regard to a symmetry plane; and/or

- the converting, applying and converting back are automated.

It is further provided a computer program comprising instructions for performing the deformation method. Optionally, the computer program may also comprise instructions for performing the conversion method and/or the design method disclosed in European Patent Application EP23306674.5.

It is further provided a computer readable data storage medium having recorded thereon the computer program.

It is further provided a system comprising a processor coupled to a memory, the memory having recorded thereon the computer program.

It is further provided a device comprising a data storage medium having recorded thereon the computer program.

The device may form or serve as a non-transitory computer-readable medium, for example on a SaaS (Software as a service) or other server, or a cloud based platform, or the like. The device may alternatively comprise a processor coupled to the data storage medium. The device may thus form a computer system in whole or in part (e.g. the device is a subsystem of the overall system). The system may further comprise a graphical user interface coupled to the processor.

**BRIEF DESCRIPTION OF THE DRAWINGS**

Non-limiting examples will now be described in reference to the accompanying drawings, where:

- FIG.s 1 to 48 illustrate the methods of European Patent Application EP23306674.5;
- FIG.s 49 to 70 illustrate the deformation method; and

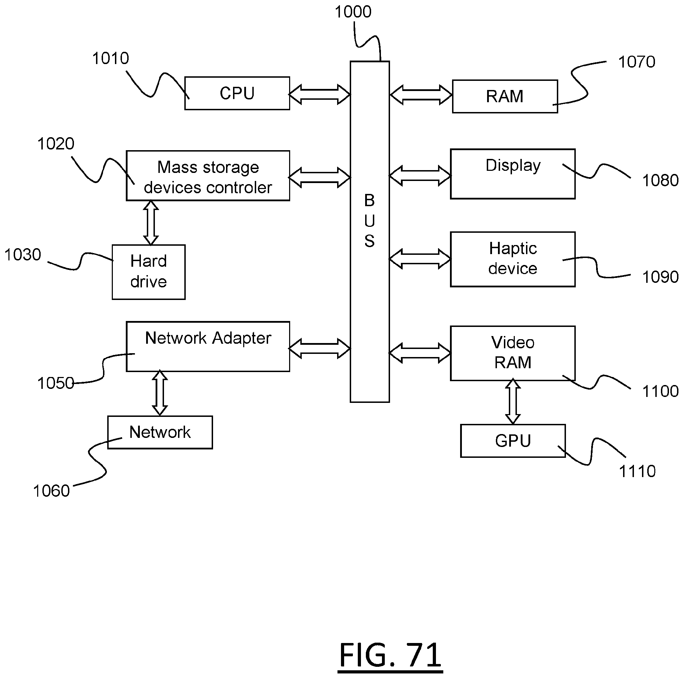

- FIG. 71 shows an example of the system.

**DETAILED DESCRIPTION**

It is provided a computer-implemented method for applying, to a given curve, a CAD deformation operator. The given curve results from a conversion of a corresponding subdivision curve defined by a base mesh into a computer-aided design (CAD) curve format. The CAD deformation operator is configured to deform an input CAD object so as to create a contact geometrical relation with another CAD object. The method comprises converting the given curve into a format readable by the CAD deformation operator. The method further comprises applying the CAD deformation operator to the converted given curve. The method further comprises converting back the result of applying the CAD deformation operator into the CAD curve format. The method may be referred to as "the deformation method", as previously explained.

The deformation method constitutes an improved solution for using subdivision curves in CAD software.

Notably, the method allows to apply a CAD deformation operator to a given curve that results from a conversion of a corresponding subdivision curve defined by a base mesh into a CAD curve format. The given curve may for example be the G2 continuous CAD curve that results from applying the conversion method of European Patent Application n°EP23306674.5 to the subdivision curve. The method allows to apply any given CAD deformation operator to such curve. For that, the method converts the given curve into a format readable by the CAD deformation operator, applies the CAD deformation operator, and converts back the result into the CAD curve format.

Furthermore, all these steps (conversion, application of the CAD operator, and back conversion) may be automated, that is applied automatically by the computer performing the method (e.g. upon a user activating a command to launch the application of the CAD operator). This makes the method ergonomics, in the context where ergonomics of the design are already improved because of the use of subdivision curves, as explained in European Patent Application n°EP23306674.5 Furthermore, from the perspective of the user (designer), the method steps are transparent, as they are carried out automatically (and for example within a few seconds, *e.g.* less than 10s, 5s, 2s or 1s). The method may furthermore be executed while the given curve is displayed. This means that the end user only sees the given curve and the manipulations (deformations) he/she is applying to the curve, but not the steps of the methods which are automatically carried out as a background process.

Moreover, the deformation method allows to use any known CAD deformation operator configured to deform an input CAD object so as to create a contact geometrical relation with another CAD object, such as a matching operation to a curve, a matching operation to a 3D point, a matching operation to a surface border, a partial fitting operation to another curve, a partial fitting operation to one or several surfaces, a partial fitting operation to a polygon, or a G2 symmetry in regards to a symmetry plane.

It is to be noted that writing a subdivision curve CAD deformation operator, instead of making the subdivision curve in a format compatible with CAD deformation operators as does the deformation method, could not allow to get the quality results allowed by use of historical CAD operators (which is enabled by the method). Indeed, the base-mesh may not bring enough degrees of freedom to fulfill the connection requests. For example, matching a subdivision curve that represents a line would not allow connecting this latter to a context with a G2 continuity level as only 2 vertices would be provided (only one to be moved for the computation).

The deformation method is for applying, to the given curve, the CAD deformation operator. This means that the method takes as input the given curve, performs the method steps (converting, applying, converting back) to apply the operator, and outputs the result, in the CAD curve format, of the application of the operator to the input curve.

The given curve results from a conversion of a corresponding subdivision curve into a CAD curve format. As previously explained the given curve may be the output of the conversion method disclosed in European Patent Application n°EP23306674.5 when applied to the subdivision curve, possibly after a modification of said output according to the design method disclosed in European Patent Application n°EP23306674.5. The given curve may thereby be a G2-continous CAD curve formed by the one or more Bezier curves, each corresponding to a respective edge of the base mesh. The given curve may have the following topological data structure: a computer object "body" references a topological object "wire" that references a one or more topological objects "edges" (one per edge of the base mesh), each referencing a respective Bezier curve (the one respective to the base mesh edge corresponding to the topological "edge" object), the Bezier curve being a geometrical object. To each edge of the base mesh corresponds a topological edge in the given curve and to each vertex of the base mesh corresponds a topological vertex in the given curve, and conversely. Each Bezier curve may be referred to as a "unitary curve" of the given curve, which is thus formed by the union of one or more such unitary curves.

For the sake of completeness, the content of European Patent Application n°EP23306674.5 is now provided.

European Patent Application n°EP23306674.5 provides a computer-implemented method for converting a subdivision curve into a corresponding computer-aided design (CAD) curve format. The subdivision curve is controlled by a base mesh. The base mesh is formed by vertices connected by one or more edges. The subdivision curve defines at least a part of a product to be manufactured. The method is for designing the product. The method comprises transforming the subdivision curve into a G2-continous CAD curve. The CAD curve is formed by the union of one or more Bezier curves. Each Bezier curve corresponds to a respective edge of the base mesh. A control polygon of the CAD curve is computed from the base mesh. The transformation is based on a Catmull-Clark refinement process. The method may be referred to as "the conversion method".

The method constitutes an improved solution for using quality curves for designing a product to be manufactured.

Notably, the method converts a subdivision curve into a CAD curve format, namely a G2-continuous CAD curve. This allows the designer to work on such CAD curve, and thus to perform Class A modeling editions. Also, the CAD curve is compatible with CAD software and CAD tools (e.g. CAD operators). The method thus bridges the CAD framework and the subdivision curve framework. Furthermore, as the CAD curve has a control polygon that is computed from the base mesh of the subdivision curve, the method allows to perform editions of the subdivision curve (for example editions the base mesh), these editions being then translated automatically to the CAD curve since its control polygon stems from the base mesh.

Furthermore, the CAD curve is formed by the union of one or more Bezier curve, each corresponding to a respective edge of the base mesh. There is thus a one-to-one mapping between each Bezier curve and each edge of the base mesh. This allows user-performed modifications to be localized: the user may act on a Bezier curve or its control points to perform a modification, and this modification affects only the part of the model corresponding to the Bezier curve, and does not have an influence far on the model, as opposed to what has been discussed above for the prior art. This greatly improves ergonomics during the design: a designer may focus (in the physiological meaning, that is eye focus) on the part of the design that he/she truly wants to edit, and the edition does not trigger unwanted changes in other parts of the model. By the way, the number of user-machine interactions is also greatly reduced, since corrections resulting from unwanted modifications do not have to be performed. Moreover, the union of the Bezier curves is already G2-continous, that is as well at the junctions between the Bezier curves, as a result of the conversion. Thus, the user does not need to work on making these junctions G2-continuous and thereby adapted for Class A modeling. Furthermore, these modifications of performed on the base mesh may be automatically and directly reverberated to the Bezier(s) curves that are affected by these modifications, as their control polygons may depend linearly on the base mesh as further discussed hereinafter.

Moreover, when working on curves defined using only Bezier curves instead of subdivision curves, one must manage the connections between the various Bezier curves, which is not ergonomic and implies the use of many computer objects (control points for example), which results in an increased computer resources consumption and increased memory size. To the contrary, the subdivision curves allow to design a complex shape with a single curve that is easier to deform and that does not require as much computer objects (control points) to store and process.

The conversion method is for converting a subdivision curve controlled by a base mesh into a corresponding CAD curve format. This means that the conversion method takes as input the subdivision curve, perform (automatically by the computer system) the conversion, and outputs the result of the conversion, that is the corresponding CAD curve format (the G2-continous CAD curve formed by the union of the one or more Bezier curves). By "CAD curve format" or "CAD curve", it is meant a curve compatible with, and usable in, a CAD software, *i.e.* on which the CAD operators and CAD tools of modern CAD software are usable. In the case of the present method, this format resulting from the conversion is the G2-continous CAD curve formed by the union of one or more Bezier curves.

The conversion method is for designing the product to be manufactured of which at least a part is defined by the input subdivision curve. This means that the result of the conversion method is usable for designing the product, for example usable in step that is part of the process of design of this product. This step may consist in the method of use, also referred to as "the design method". The conversion method and the design method may be integrated into a same design process, which comprises performing the conversion method and then the design method. The conversion method itself may form a design step, for example if it comprises, by the user, creating the input subdivision curve by performing a sketch of the geometrical shape of the curve. Then, upon creation of the sketch, the method may comprise, automatically by the system, the calculation of the base mesh and then the conversion into the CAD format.

The product is to be manufactured. This means that at some point after the method, that is downstream to the method, after execution of the design method for example, a model of the product resulting from the design and comprising said part defined by the subdivision curve will be used for manufacturing the product in accordance with the design.

As previously said, the input of the method is the subdivision curve. The subdivision curve is defined by a base mesh. In other words, the base mesh fully defines the subdivision curve. The base mesh may reflect and control a geometrical shape of the curve. Creation of the subdivision curve may comprise, by a user, defining the geometrical shape (for example by performing a shape), and, by the computer system, automatic inference of the base mesh by any suitable method. The base mesh is a topological structure that consists in a set of vertices and edges, each edge connecting two vertices. The base mesh comprises one or more of such edges. The vertices and the edges may be referred to as cells. This topological structure controls and defines the geometrical shape of the curve. The concept of subdivision curve is well known (see for example references https://courses. cs.washington.edu/courses/cse457/11au/lectures/sub division.pdf and http://cgpp.net/file/cgpp3e ch22W.pdf.)

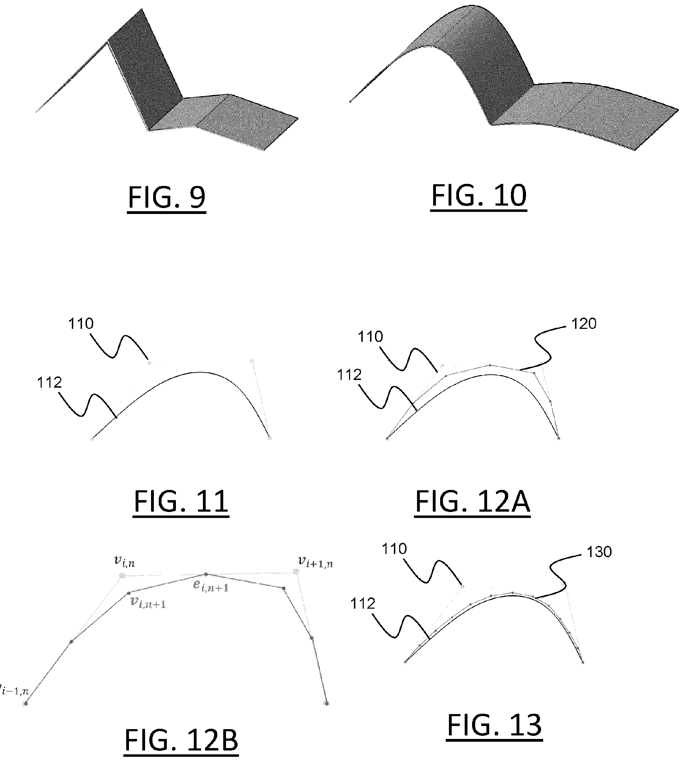

A subdivision curve is equal to the boundary of a subdivision surface where the base mesh of the subdivision surface is the extrusion of the base mesh of the subdivision curve. FIG.s 7 to 10 illustrate this bridge between subdivision curves and surfaces. FIG. 8 shows a subdivision curve and FIG. 7 shows its base mesh. FIG. 9 shows the base mesh of the corresponding subdivision surface, which as can be seen is the extrusion of the base mesh shown on FIG. 7. FIG. 10 shows the subdivision surface, which is the extrusion of the subdivision curve shown on FIG. 8. Conversely, the subdivision curve shown in FIG. 7 is a boundary of the subdivision surface shown in FIG. 9, and the subdivision curve shown on FIG. 8 is a boundary of the subdivision surface shown on FIG. 10.

The subdivision curve defines at least a part of the product to be manufactured. This means that the product, as modeled in the CAD system, has a part (*e. g.* an outer surface portion) defined based on the subdivision curve. For example, the outer surface portion may be the CAD curve into which the subdivision curve is converted, or a surface extruded from this CAD curve. This does however not exclude further design steps where this part of the CAD model of the product defined by the subdivision curve is modified.

The method may comprise, for example as an initial step, providing (obtaining) the subdivision curve. Providing the subdivision curve may comprise creating the subdivision curve. Creating the subdivision curve may comprise sketching, by graphical user interaction, a geometrical shape of the curve, and then, by the computer system, automatically computing the base mesh (by any suitable method). The creation may optionally comprise further modification(s), by graphical user interaction, of the base mesh. Providing the subdivision curve may alternatively comprise retrieving (*e.g.* downloading) the curve from a (*e.g.* distant) data storage medium where the subdivision curve has been stored further to its creation.

The method comprises (for example further to the providing of the subdivision curve) transforming the subdivision curve into a G2-continous CAD curve formed by the union of one or more Bezier curves. This step may be performed automatically by the computer system, that is without any further user action (*e.g.* without for example the user having to click on a button to launch the transformation), upon the providing of the subdivision curve. For example, the user may create the subdivision curve's geometrical shape as explained above, upon which the computer system automatically computes the base mesh and automatically performs the transforming step. This may be performed in real-time, *i.e.* the time between the providing of the subdivision curve and the result of the transforming step may be of a few seconds or less, for example lower than 10s, 5s, 2s or 1s. This means that the transforming step is very fast and real-time, such that it is transparent to the user. The method may comprise displaying the G2-continous curve on a display of the computer system. This provides instantaneous visual feedback to the user, which for example upon sketching the shape of the subdivision curve is automatically and in real-time provided with visual feedback in the form of the display of the G2-continous curve resulting from the transforming step. The method may also comprise displaying the base curve, for example by default as of its creation and for the remaining part of the method (including the transforming step), and/or displaying the control polygon of each Bezier curve, for example by default once the transforming step is done. Alternatively, the display of the base curve and/or of the control polygons of the Beizer curves may be performed upon the user activating a display graphical command (for example by clicking on a button). The user may for example trigger the display of the base curve by a specific graphical command activation and/or the display of the control polygons of all the Bezier curves or of one or more of them by another specific graphical command activation.

The transforming step may also be referred to as "the conversion step". This transforming/conversion step is done by applying a conversion process that is based on a Catmull-Clark refinement process, for example by using applying directly a Catmull-Clark refinement process. The Catmull-Clark refinement process works as follows. Given a curve base mesh, the process performs a subdivision that iteratively refines the base mesh (*i.e.* by iteratively adding vertices and/or edges). This process converges to a limit curve, that is a uniform cubic spline The spline may be C2-continuous when the subdivision curve does not comprise sharpness or weight.. In this case the subdivision converges toward a C2-continuous NURBS having arcs which are represented by Bezier curbs. In any case (including when the subdivision curve comprises sharpness or weight), the limit curve is internally G2-continuous. FIG.s 11, 12A and 13 illustrate such a process. FIG. 11 shows a base mesh 110 and the limit curve 112. FIG. 12A further shows the result 120 of the first subdivision level. FIG. 13 further shows the result 130 of the second subdivision level.

The output of the method includes the result of the transformation, that is the G2-continous CAD curve formed by the one or more Bezier curves. The output may consist in a computer object or data that may consist in the following topological data structure: a computer object "body" references a topological object "wire" that references a one or more topological objects "edges" (one per edge of the base mesh), each referencing a respective Bezier curve (the one respective to the base mesh edge corresponding to the topological "edge" object), the Bezier curve being a geometrical object. The output may also include the base mesh. To each edge of the base mesh corresponds a topological edge in the output and to each vertex of the base mesh corresponds a topological vertex in the output, and conversely. In other words, the input of the method is the subdivision curve as defined by the base mesh, and the output is that same subdivision curve but converted into the CAD curve format.

The transformation may apply the Catmull-Clark refinement process that is described in reference Catmull, Clark, "Recursively Generated BSpline Surfaces On Arbitrary Topological Meshes", 1978, which is incorporated herein by reference, this process being referred to as "the method" in said reference, except that the process is applied to a curve instead of a surface. The level of refinement may be user specified, or, alternatively, may be predefined and fixed. The Catmull-Clark process is applied by the method in such a way that for each edge of the mesh, a respective single portion of the G2-continous CAD curve is generated. In other words, there is exactly one Bezier per patch ("patch" being in the sense of Catmull, Clark, "Recursively Generated BSpline Surfaces On Arbitrary Topological Meshes", 1978). The NURBS is a concatenation of Bezier curves (which may also be referred as arcs), and as discussed hereinafter, the control polygons of each of these Bezier curves is computed based on the base mesh.

The application of the refinement process that is described in reference Catmull, Clark, "Recursively Generated BSpline Surfaces On Arbitrary Topological Meshes", 1978 may in implementations be as follows. By denoting $\{v_{j,n}\}_j$ the subdivision vertices at level *n,* the subdivision curve is refined to level *n* + 1 by creating vertices $\{v_{j,n+1}\}_j$ coming from existing vertices and $\{e_{k,n+1}\}_k$ coming from existing edges with the following rule (of which application is illustrated on the example shown on FIG. 12B which corresponds to the subdivision step illustrated on FIG. 12A):

$$v_{i,n+1} = \frac{v_{i-1,n} + 6v_{i,n} + v_{i+1,n}}{8}$$

$$e_{i,n+1} = \frac{v_{i,n} + v_{i+1,n}}{2}$$

In these implementations, extremity or sharp vertices remain in place.

The curve that results from the conversion is a G2-continuous curve which is a uniform cubic spline (as discussed in reference Catmull, "A Subdivision Algorithm for Computer Display of Curved Surfaces", PhD thesis 1974, which is incorporated herein by reference). This G2 continuous curve is formed by the union of the one or more Bezier curves, each resulting from the conversion of a respective base mesh edge.

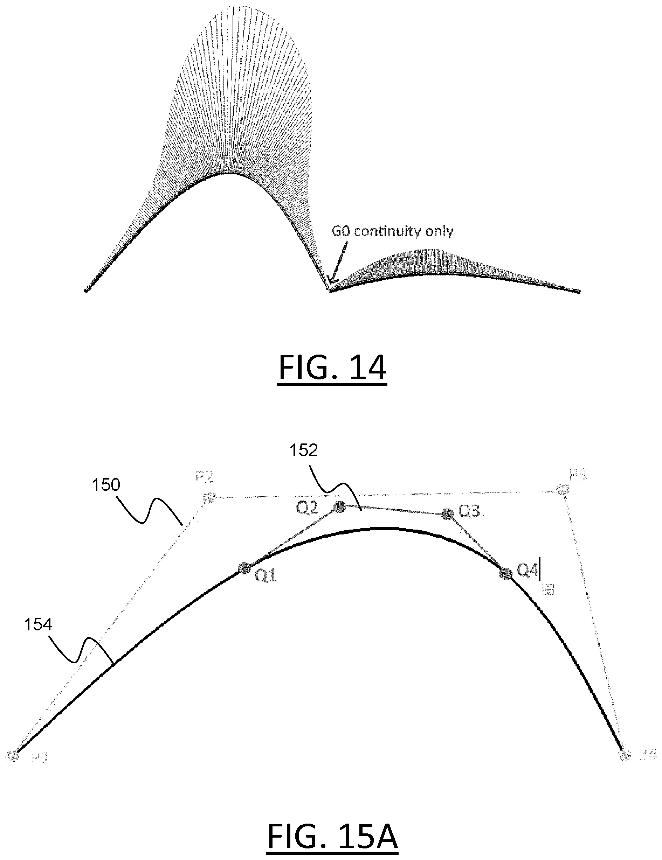

The notion of G2 continuity has been discussed above. It is now briefly provided as definition of this (well-known) notion, to perfect completeness. First of all, the curvature herein refers to a geometry term indicating the extent that a curve or surface deviates from perfect straightness or flatness. Curvature may be measured as the inverse of a local osculating radius. Thus, a curve has a low curvature and a large radius when it is slightly bent only and has a high curvature and a small radius if bent sharply. Continuity refers herein to a connection type at a given point. For a given vertex, G0 continuity stands for point continuity at the point (meaning that the curve is continuous at the point), G1 continuity stands for tangent continuity (meaning that the tangent of the curve is continuous at the point), and G2 continuity stands for curvature continuity (meaning that the curvature of the curve is continuous at the point). A curve is G0-continous (resp. G1-continuous, resp G2-continuous) if it has G0 continuity (resp. G1 continuity, resp. G2 continuity) in all its points. G0 continuity is commonly used to represent crease/sharp features. FIG. 14 illustrates the concept of G0 continuity.

The curve base mesh is the control polygon of the generated cubic B-spline curve, which is the union of N Bezier curves, N being the number of edges of the base mesh. Each Bezier curve may be associated with a control polygon (i.e. its own respective control polygon). The concept of control polygon of (or associated with) a Bezier or NURBS curve is well known. This control polygon associated with the Bezier curve has control points which may depend linearly on vertices of the base mesh. The control points of the control polygon associated with the Bezier curve may correspond to a product of said vertices of the base mesh with a matrix. Said vertices of the base mesh may include the vertices connected by the respective edge to which the Bezier curve corresponds and vertices of neighboring edges (for example the vertices of all the base mesh edges that include at least one vertex of said respective edge).

The control polygons are illustrated on FIG. 15A, which shows the spline 154, the base mesh 150 which is the control polygon of the spline 154, and the control polygon 152 which is that of the Bezier curve associated with edge P2-P3 of the base mesh 150 (Pi being the vertices of the base mesh, and Qi the control points of the control polygons of the Bezier curves). In implementations, the Qi depend linearly on the Pi through the following matrix relation:

$$\begin{pmatrix} Q1 \\ Q2 \\ Q3 \\ Q4 \end{pmatrix} = \frac{1}{6} \begin{pmatrix} 1 & 4 & 1 & 0 \\ 0 & 4 & 2 & 0 \\ 0 & 2 & 4 & 0 \\ 0 & 4 & 4 & 1 \end{pmatrix} \begin{pmatrix} P1 \\ P2 \\ P3 \\ P4 \end{pmatrix}.$$

Although the formula is illustrated by edge P2-P3 in FIG. 15A, the corresponding same formula is used for the other edges.

The above described the so-called regular case of the respective base mesh edge where there is no weight (or attraction) applied on any vertex of the edge. It is now discussed the extraordinary case where at least one of the edges of the respective edge has weight or attraction. Prior to that, the concept of Valence and of regular and extraordinary vertices are discussed.

Valence is the number of edges around a vertex of the base mesh. For curves the valence can be 1 (for extremity vertices) or 2 (for internal vertices), for surfaces valence is at least 2. The term "extraordinary vertex" comes from the Subdivision Surface literature to qualify types of base mesh vertices. In case of Subdivision Surface, vertices are said regular if they don't have any weight or sharpness and if they're internal with valence 4 or on the boundary with valence 2 or 3. They are called extraordinary otherwise. Around a regular vertex, surfaces meet with natural C2 continuity. Around an extraordinary vertex, surfaces meet with G0 or G1 continuity only. In the case of Subdivision curves, regular vertices are all vertices without sharpness or weight.

If at least one of said vertices connected by the respective edge is sharp, the matrix may be such that it enables sharpness preservation in the Bezier curve. For example, in the above formula, Q1 depends on P1, P2, P3. If P2 is sharp, the matrix may be modified so that Q1 only depends on P2 and P3. This may be applied equally to each such sharp vertex.

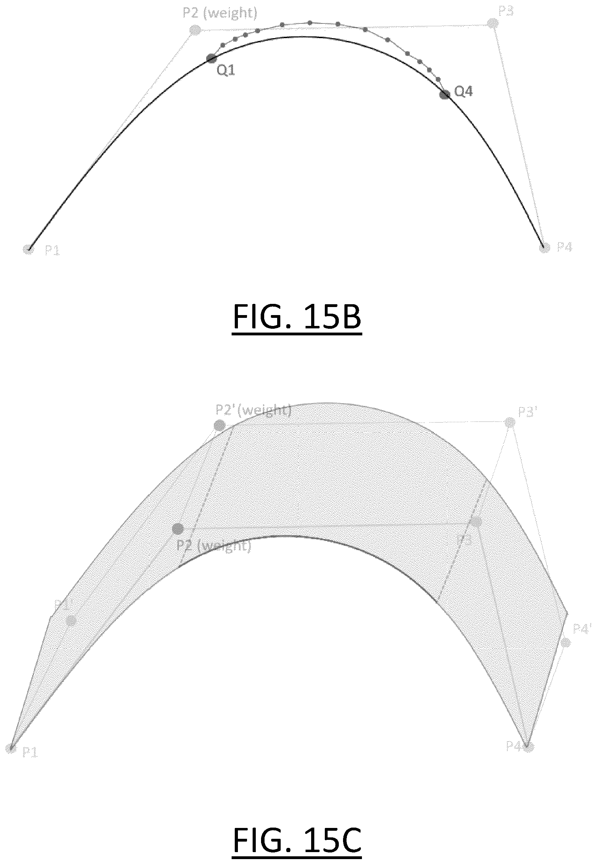

If at least one of said vertices connected by the respective edge has weight, the matrix may be such that it enables weight preservation in the Bezier curve. For example, in the above formula, if vertex P2 has weight (i.e. the curve is to be locally attracted toward P2), a specific treatment may be done to the matrix to ensure a good curvature around P2. This process may be any process suitable for this purpose, for example that which is partially expressed in EP Patent Application Publication EP1750228A2 (which has been granted), which is incorporated herein by reference. More specifically, in the case of subdivision surfaces, previously mentioned EP Patent Application Publication EP1750228A2 describes how to improve the shape of the approximated surface around extraordinary vertices. The process may add more degrees of freedom by using NURBS curve (e.g. degree 6 NURBS curve in implementations). The extra control points required to define this curve may be moved by solving a linear system, optimizing the shape curvature quality, as disclosed in paragraphs [0033] to [0037], [0068] to [0077] and FIG. 3 of EP Patent Application Publication EP1750228A2. The method may use this disclosure to compute an approximation of a subdivision curve which is the restriction of a subdivision surface when there is at least one extraordinary vertex. For that, the method may comprise defining for each edge with at least one extraordinary vertex a local subdivision surface base mesh on which the method computes the subdivision surface, using the disclosure of EP Patent Application Publication EP1750228A2 and extracts the appropriate boundary, which forms the approximation of the subdivision curve. The control polygon in this case may be that of the approximation of the subdivision curve. This surface base mesh is simply the extrusion in any direction of the one of the curves, with weights and sharpness also reported. This is illustrated on FIG.s 15B and 15C, where FIG. 15B shows the curve approximation in the extraordinary case where vertex P2 of edge P2P3 has weight, and FIG. 15C illustrates the subdivision surface mesh creation and boundary curve extraction.

Further advantages and examples of the conversion method are now discussed.

Subdivision curves come with a multi-level description that allows the user to access to a base-mesh. This base-mesh is similar to a control points network for a Bezier curve but behaves much more globally. Thanks to this mathematical description, it becomes very easy to create very complex curves, keeping a very simple base-mesh. In addition to that, attraction (weight) can be put onto vertices & edges, to deform the resulting curve without modification on the vertex position of the base-mesh, offering even more freedom. This attraction can be a sharp one, allowing the user to create a curve which is natively G2 continuous, and punctually only G0, to create sharp vertices, or polylines, or other sharp features. In addition to all those features, subdivision curve topology is completely free. It is thus very easy to create an opened curve, but also a closed curve, with any kind of shape.

Furthermore, all the well-known operations which are available on subdivision surfaces can be also projected on the curve world: insertion/removal of vertices at a precise location, extrusion of free vertices to extrude the curve extremities, deformation of the base-mesh to deform the shape, modification of vertex weight, and/or bevels on vertices.

The conversion method allows the user to manipulate these curves during design, thus allowing to benefit from all the advantages of these curves, while offering conversion of these curves in the CAD format, thereby allowing Class A modelling.

In other words, all the above-described operations on subdivision curves can be performed at the subdivision level, and conversion into Bezier curves (provided by the conversion method) allow to integrate the result into the classical CGM modeler. This integration allows to use historical operators on those curves, such as Booleans (fillet, trim, split) or any other operations.

The conversion method also offers a native bridge between the curve world and the surface world. Stating that for concept, subdivision surfaces are mainly used for modeling, it becomes much easier to create subdivision surfaces from subdivision curves, bringing also better and more precise result (with less or without deviation).

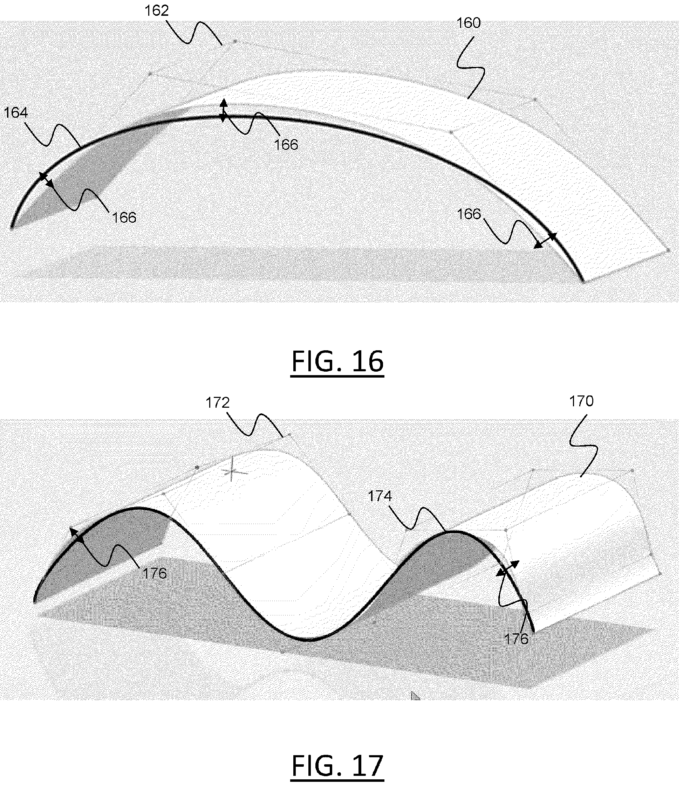

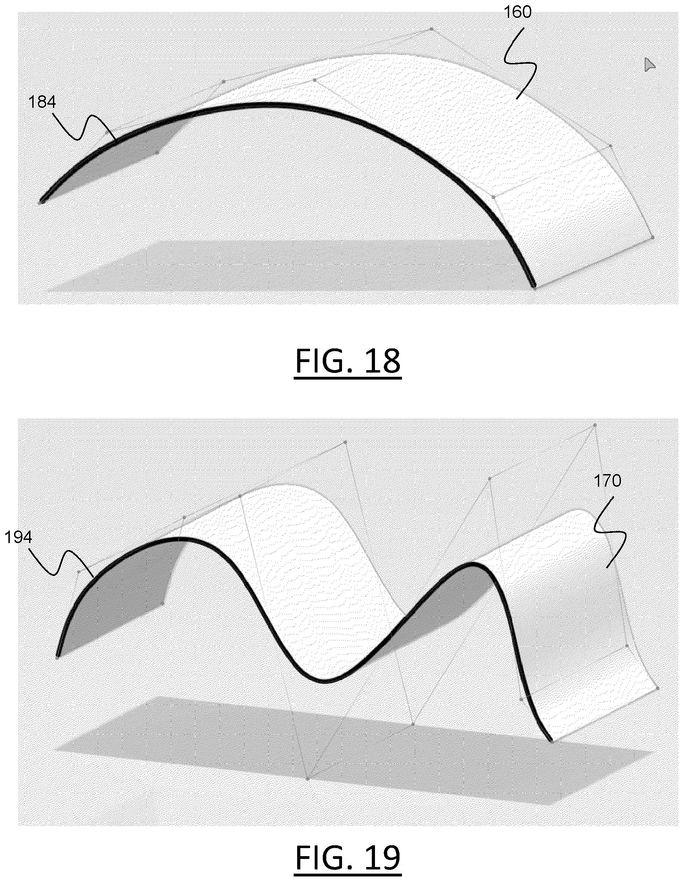

Subdivision surfaces are already integrated in CAD modelers. However, in current software solutions that use Bezier or NURBS curves to create subdivision surfaces from these curves, a deviation is observed between the surfaces and these curves. FIG.s 16 and FIG. 17 illustrate this. FIG. 16 shows a subdivision surface 160 (with base mesh 162) obtained from Bezier or NURBS curve 164. As can be see, deviations 166 are observed between the curve 164 and the surface 160. Likewise, FIG. 17 shows a subdivision surface 170 (with base mesh 172) obtained from Bezier or NURBS curve 174. As can be see, deviations 176 are observed between the curve 174 and the surface 170. FIG. 18 shows the subdivision surface 160 of FIG. 16, but this time obtained from subdivision curve 184, and FIG. 19 shows the subdivision surface 170 of FIG. 17, but this time obtained from subdivision curve 194. As can be seen on the figures 18 and 19, there is no deviation between the subdivision curves and the subdivision surfaces.

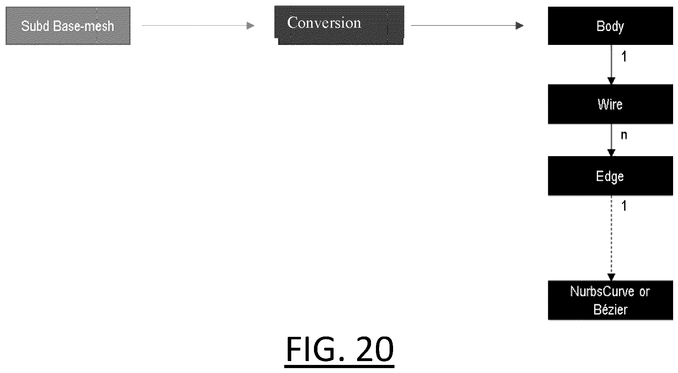

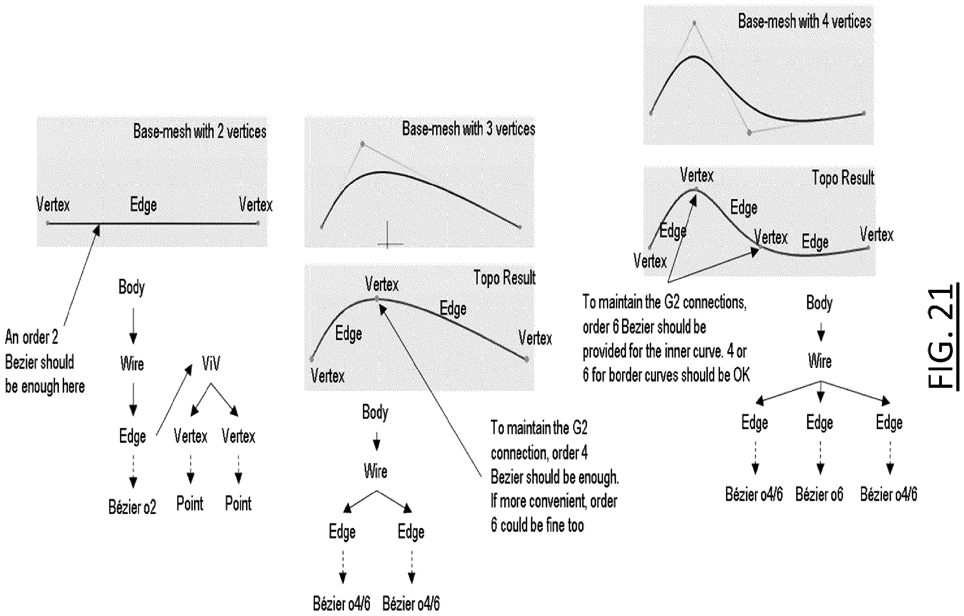

As previously outlined, the output topological structure resulting from the conversion (body->wire->edges->Bezier curves) can be understood (that is used directly) by a CAD modeled. FIG. 20 shows a flowchart that illustrates the input of the conversion and the output topological structure. FIG. 21 also shows examples of the output topological structure, illustrated by diagrams and curve sketches.

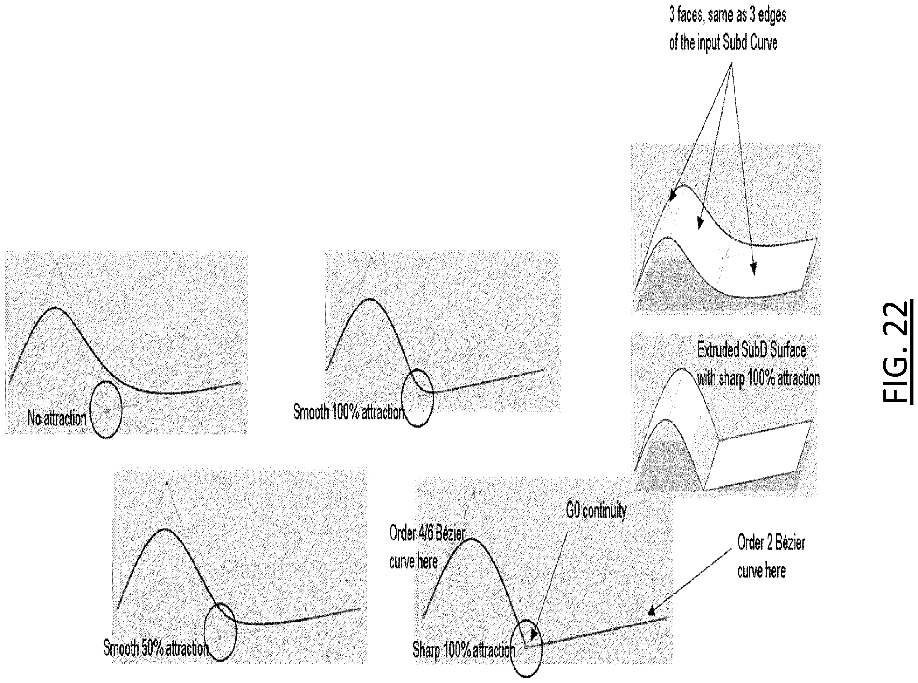

The conversion also allows to preserve sharpness and weight/attraction on vertices, as previously explained. Furthermore, it generates curve representations that are boundaries of the extrusion surfaces that would be obtained from the base meshes resulting from extrusion of the bases meshes defining the subdivision curves as previously said. FIG. 22 illustrates these advantages.

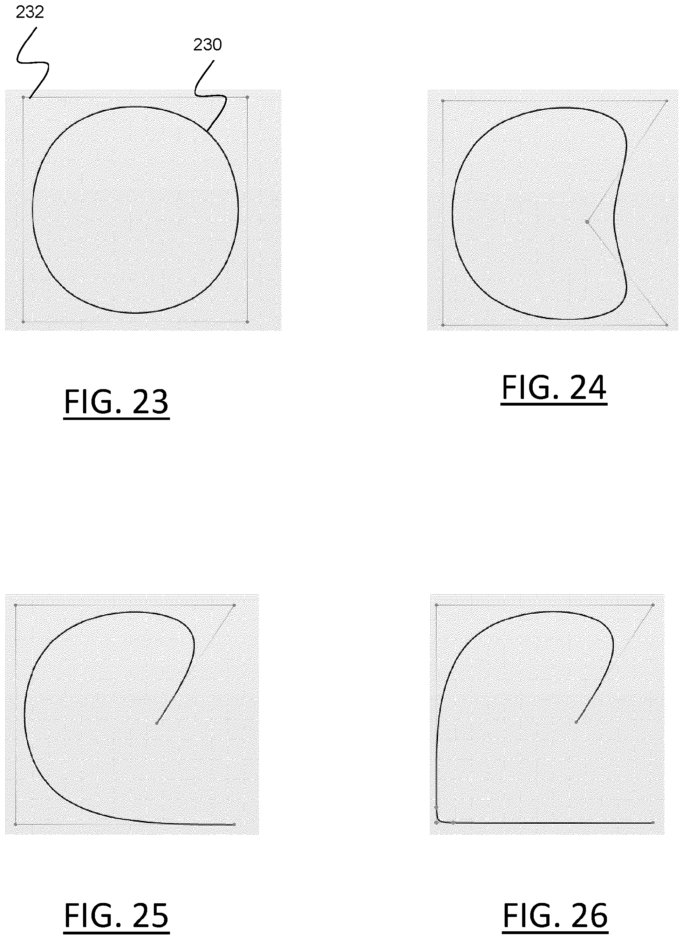

Subdivision curves allow to create any kind of shapes, and thus the conversion method allows to convert all those shapes consistently. FIG. 23 illustrate a circular closed shape 230 defined by a base mesh 232 formed by 4 vertices. Such a shape could not be created using standard Bezier and NURBS curve. Shape deformation can be easily performed by adding a vertex to the base mesh 232 (as shown on FIG. 24) and opening the shape can be easily done by removing an edge of the base mesh 232 (as shown on FIG. 25). FIG. 26 shows that a bevel with 3 vertices can be easily created (here on the bottom left vertex of base mesh 232) to create pinch, like a fillet.

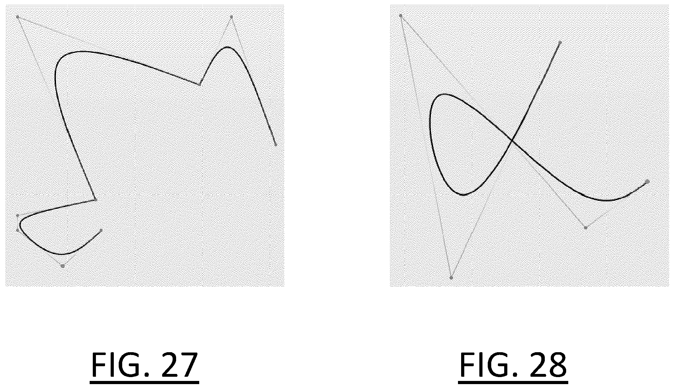

Subdivision curves also allow to create easily sharp vertices to have G0 continuities, as illustrated on FIG. 27. This kind of shape cannot be created with historical Bezier and NURBS curves. Several of them must be created and then connected to achieve this kind of shape. The connection must later be maintained with other paradigms (such as constraints or matching) which lower the performances and productivity of the user. This is natively supported by subdivision curves and the conversion method. Subdivision curves also allow to create very freeform shapes, with a small number of vertices, as illustrated on FIG. 28.

European Patent Application n°EP23306674.5 also provides a CAD model. The CAD model represents a product to be manufactured. The CAD model comprises at least a part defined by a subdivision curve and obtainable according to the conversion of a base mesh of the subdivision curve into a corresponding CAD curve format. The conversion is according to the conversion method. Said at least a part corresponds to a G2-continous CAD curve formed by the union of one or more Bezier curves. The number of Bezier curves is equal to the number of edges of a base mesh of the subdivision curve. The base mesh forms a control polygon of the CAD curve.

The at least a part is obtainable according to the conversion of the base mesh of the subdivision curve into a corresponding CAD curve format, where the conversion is according to the conversion method, and the at least a part corresponds to a G2-continous CAD curve formed by the union of one or more Bezier curves. This means that the at least a part is, or is obtained from, the G2-continous CAD curve, and that this G2-continous CAD curve is the G2-continousCAD curve that results from the transforming step of the conversion method applied to the subdivision curve that defined the at least a curve, or any G2-continous CAD curve that could have been obtained by applying the conversion method to the subdivision curve. Thus, this G2-continuous CAD curve is formed by the union of one or more Bezier curves, the number of Bezier curves is equal to the number of edges of a base mesh of the subdivision curve, and the base mesh forms a control polygon of the CAD curve, as it is for the conversion method. The subdivision curve and the G2-continous CAD curve to which the at least a part of the model corresponds may have anyone or any combination of the features of those curves as described for the conversion method. By "corresponds to", it is meant that the at least a part may be the G2-continous CAD curve or may be obtained therefrom. For example, the at least a part may be a surface resulting from the extrusion of the G2-continous CAD curve.

European Patent Application n°EP23306674.5 also provides a computer-implemented method of use of the CAD model. The method of use comprises performing one or more modifications of the base mesh of the subdivision curve. The one or more modifications are passed (automatically by the computer, for example using the relation linking the control polygons of the Bezier curves and the base mesh) on said at least a part of the CAD model. Alternatively or additionally, the method of use comprises applying one or more CAD operations to said at least a part. Performing one or more modifications of the base mesh of the subdivision curve may include performing one or more of:

- inserting a vertex;
- removing a vertex;
- adding a Bevel at a vertex;
- extruding an extremity vertex to extend the curve;
- adding attraction on one or more vertices; and/or
- changing the topology from an open shape to a closed one or vice-versa.

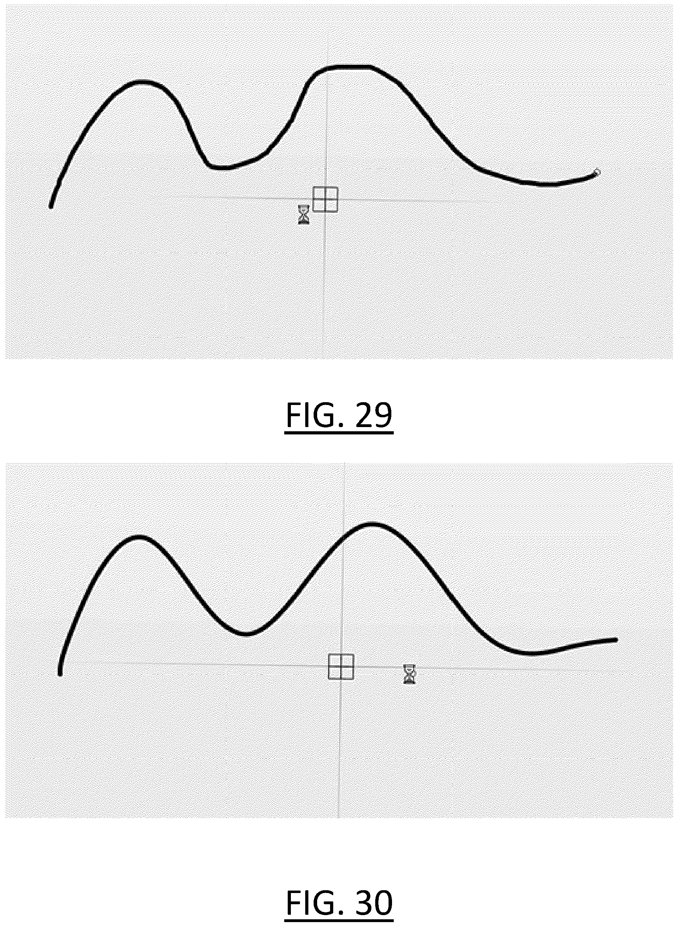

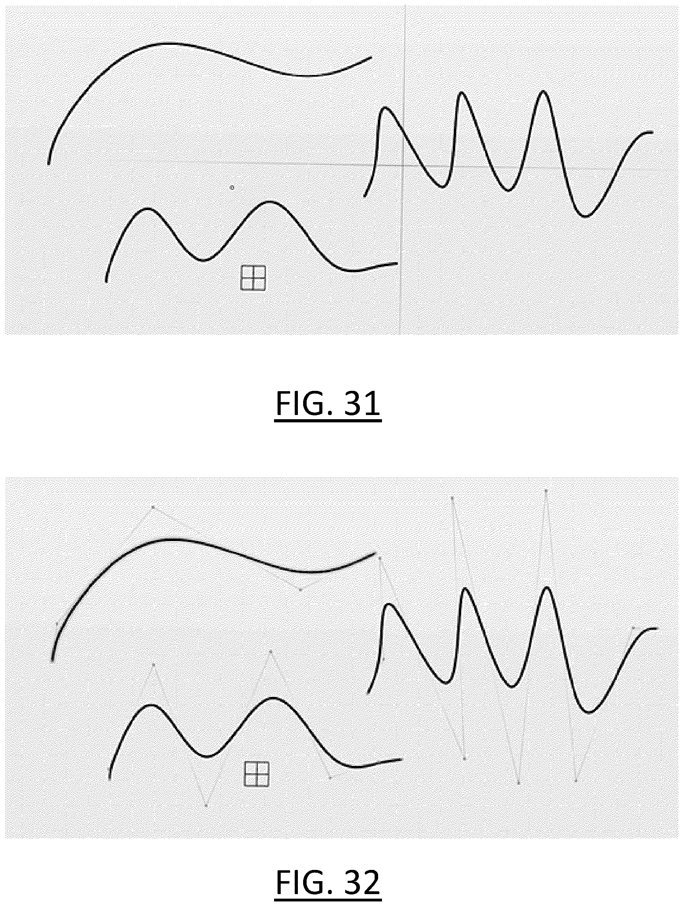

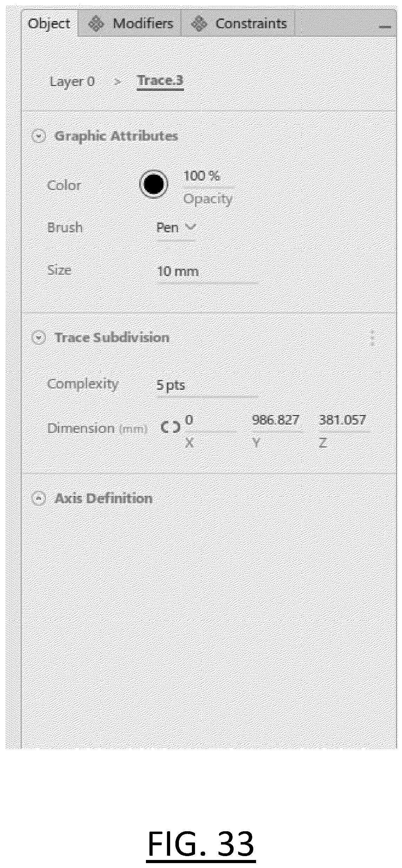

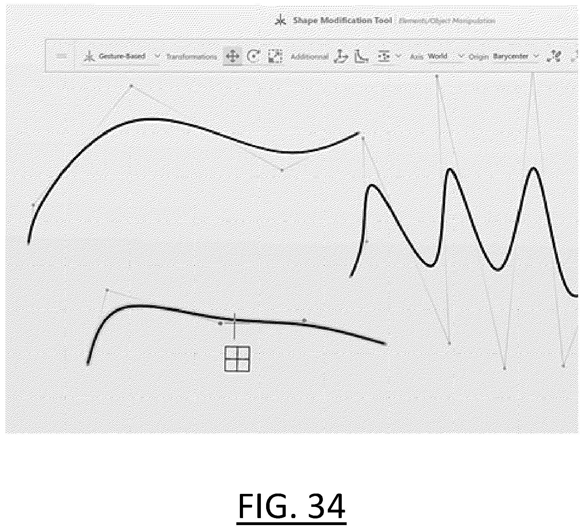

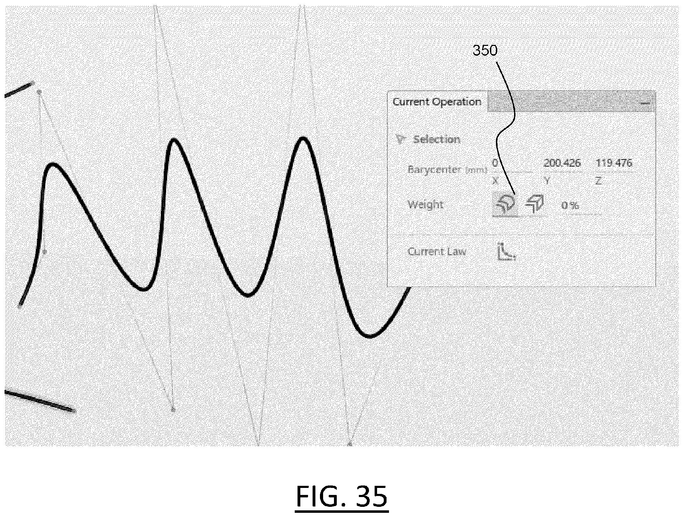

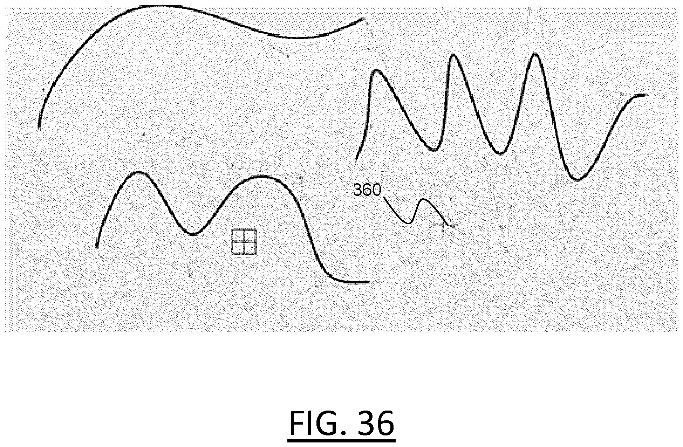

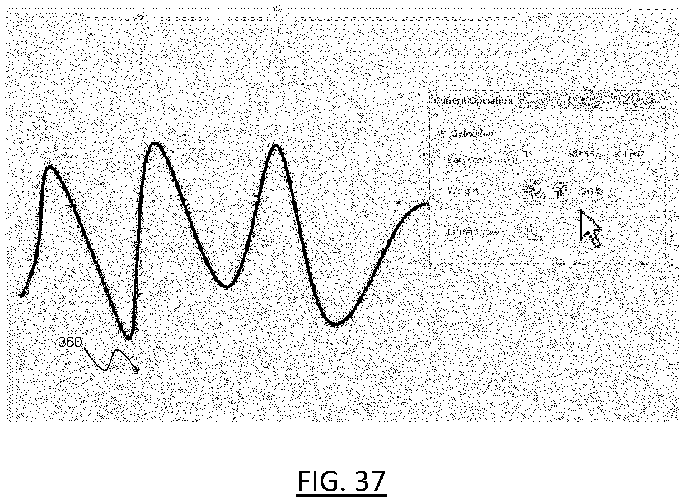

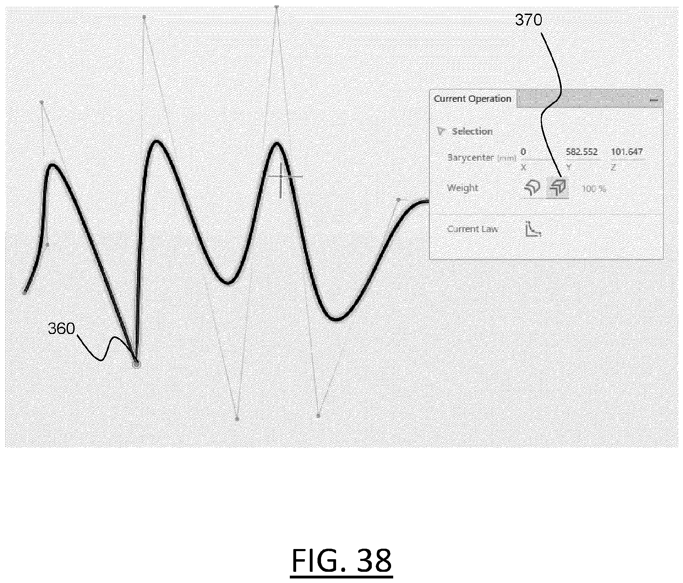

FIG.s 29 to 38 show screenshots of a video of a designer using subdivision curves according to an implementation of the methods. These figures illustrate the methods and advantages thereof. FIG. 29 shows a screenshot of a shape of a subdivision curve that the designer has just created. The conversion method is being applied, and a few seconds later, the subdivision curve has been converted into the CAD curve format by the conversion method. FIG. 30 shows this G2-continuous CAD curve. FIG. 31 shows several G2-continuous CAD curves, including that of FIG. 30, obtained in the same way. FIG. 32 shows the display of the respective base meshes of the input subdivision curves. This display may be triggered upon the user activating a command for that purpose. FIG. 33 shows a screenshot of a graphical widget for modifying a base mesh. This graphical widget is actually displayed on a same screen as the curves shown in the previous figures 29 to 32 but is shown separately in the present disclosure for clarity. As can be seen on FIG. 33, the widget allows the user to, upon selection of a base mesh (or several), modify parameters of the base mesh(es), including its (their) complexity (number of vertices). The graphical widget may be displayed upon the user activating a command for that purpose. Here on FIG. 33, the user has just modified the number of vertices from 8 to 5 for the bottom curve shown on FIG.s 31-32. FIG. 34 shows the result of this modification on the bottom curve. FIG. 35 shows a partial screenshot of still the same screen, where yet another widget has been displayed upon user-activation of a command for that purpose. As can be seen on FIG. 35, the user has selected (clicked on) a graphical tool 350 that allows modification of the weight of a selected mesh vertex (or more). On FIG. 36, it is shown that the user has selected vertex 360 of the right-side curve's base mesh. FIG. 37 shows, the widget of FIG. 35 being displayed along the right-side curve, the user interacting with the widget to modify the weight value of the selected vertex 360 to 76%, thereby modifying the shape of the curve. FIG. 38 shows yet another interaction of the user with the displayed widget, where the user has selected this time the sharpness graphical tool 370, thereby making the selected vertex 360 sharp.

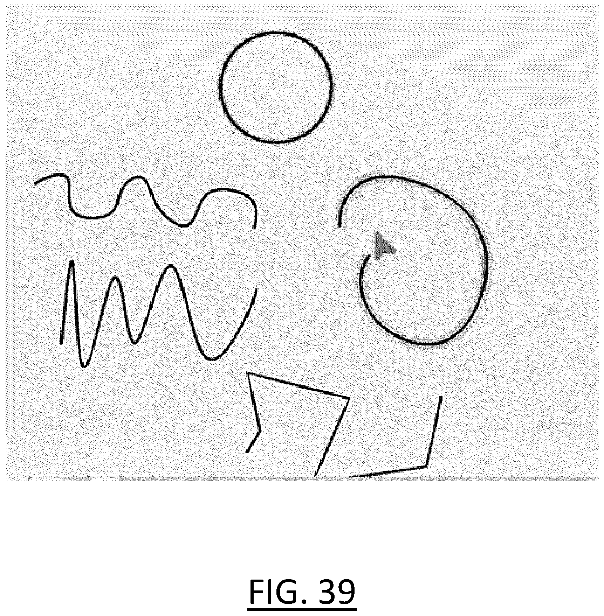

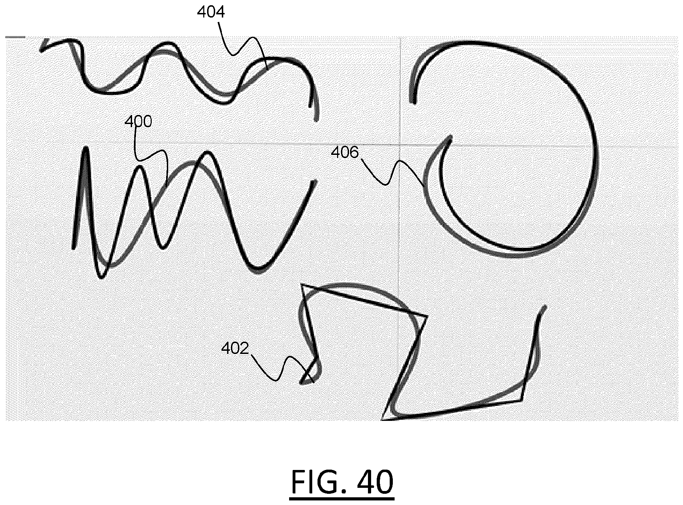

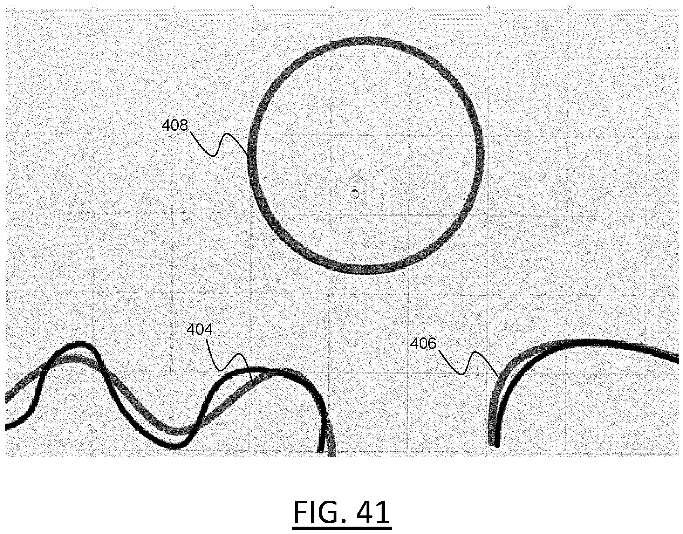

FIG.s 39 to 48 are screenshots from the same CAD software interface as that shown in FIG.s 29 to 38 and illustrate a comparison between subdivision curves and Bezier curves. FIG. 39 shows five subdivision curves. On FIG. 40 and FIG. 41, Bezier curves 400, 402, 404, 406 and 408 have been sketched over the subdivision curves of FIG. 39 to roughly reproduce their shapes. FIG.s 42 to 45 show the control polygons 420, 428, 422 and 426 of, respectively, Bezier curves 400, 408, 402 and 402. As can be seen the polygons do not fit well the curves due to the complex shapes of these curves, and are not at all ergonomics to manipulate, as they stretch wide and far over the screen. In contrast, FIG.s 46 to 48 show the base meshes 460, 466 and 468 of curves 400, 406 and 408 (respectively). As can be seen, these base meshes fit much better the shapes of the curves and are clearly more ergonomic to manipulate.

The deformation method is now further discussed.

The CAD deformation operator is configured to deform an input CAD object so as to create a contact geometrical relation with another CAD object. By "CAD object", it is meant a CAD model or a part of a CAD model, or, more generally, any computer object adapted for use by a CAD software. By "Contact geometrical relation", it is meant a direct geometrical contact such as a matching contact, a fitting contact, or a tangency contact, or an indirect geometrical contact, such as a symmetry or a distance constraints). The operator may be one of: a matching operation to a curve, a matching operation to a 3D point, a matching operation to a surface border, a partial fitting operation to another curve, a partial fitting operation to one or several surfaces, a partial fitting operation to a polygon, a G2 symmetry in regard to a symmetry plane.

CAD deformation operators are well-known in CAD. However, they work on Bezier or NURBS technologies. That is, a CAD deformation operator is configured to be applied to a single (*i.e.* topologically mono-cell) NURBS or Bezier curve, *i.e.* where such curve is associated with a single topological cell (edge for example). To the contrary, the given curve of the method may be the union of Bezier curves where each Bezier curve is associated with a single topological cell (edge), with a one-to-one mapping between such edges and the edges of the base mesh. The result of the conversion of the subdivision curve into the CAD format is thus composed of several topological cells, each of them pointing to an underlying Beziercurve. In other words, the given curve has a multiple-cell topological structure, whereas the known CAD deformation operators are configured to be applied to Bezier or NURBS curves associated with mono-cell topological structures.

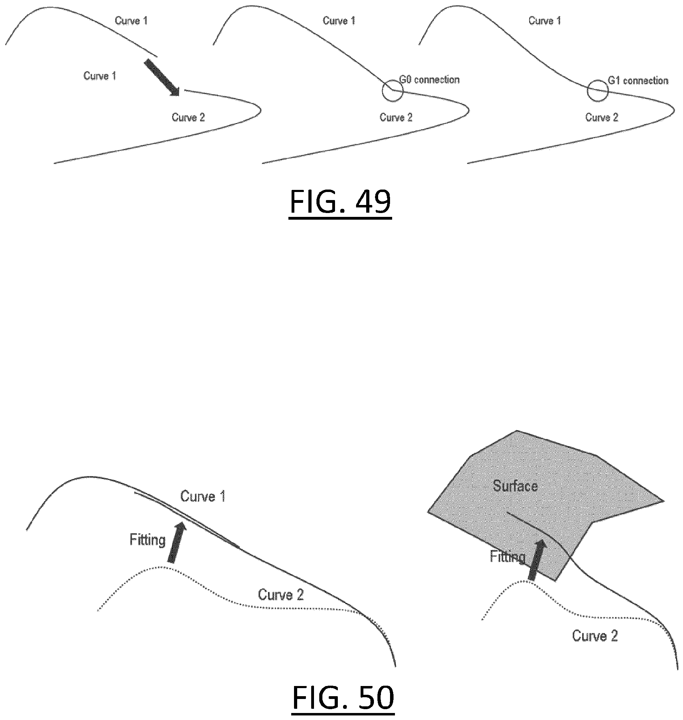

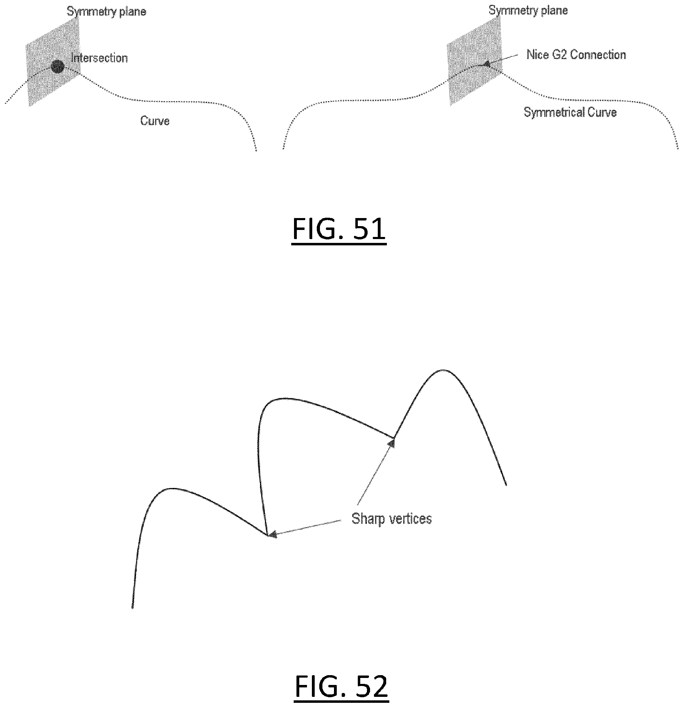

FIG. 49 illustrates example of a CAD deformation operator, the matching operator. The operator takes as input Curve 1 and deforms it to match Curve 2, with either a G0 connection or a G1 connection. FIG. 50 illustrates a "partial fitting to another curve" CAD deformation operator (left drawing) and a "partial fitting to a surface" CAD deformation operator (right drawing). FIG. 51 illustrate a "G2 symmetry in regards to a symmetry plane" CAD deformation operator.

The deformation method comprises converting the given curve into a format readable by the CAD deformation operator. As previously explained, such operator does not take as input several Bezier curves each pointed by a different topological cell. The conversion thus comprises the transformation of the union of Bezier curves (also referred to as "unitary curves") forming the given curve and each pointed by a respective topological edge (as previously explained) into one or more NURBS curves each pointed by a single topological cell.

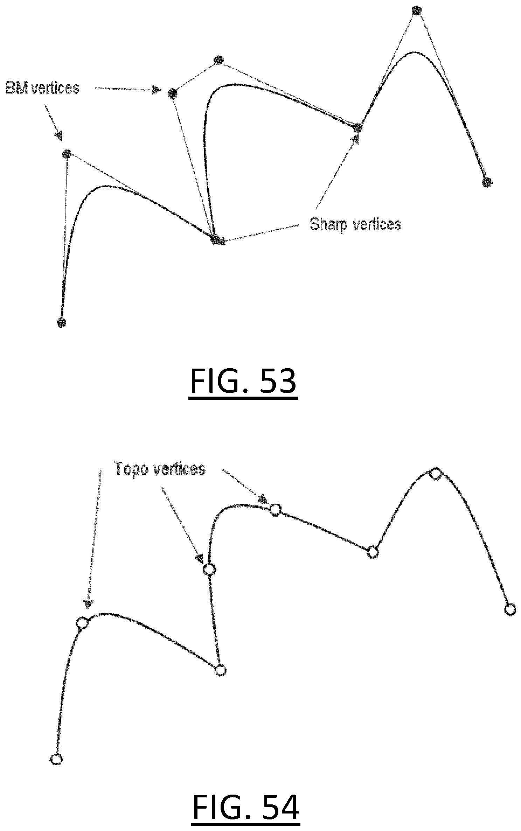

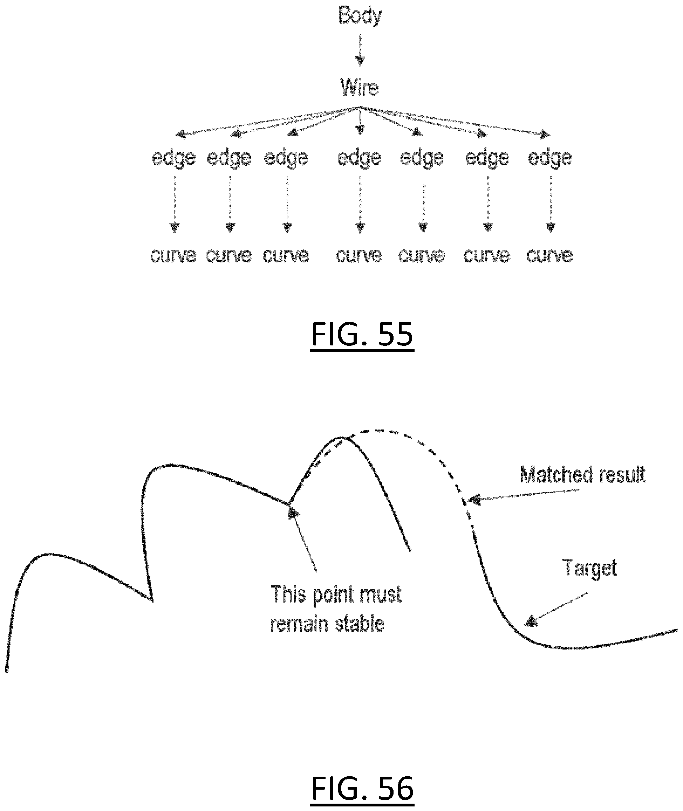

Prior to the conversion, the method may comprise detecting sharp vertices in the base mesh, and identifying corresponding sharp vertices (equivalently, sharp junctions/connections between unitary curves) in the given curve. FIG. 52 shows sharp vertices in an example of the subdivision curve. Although FIG. 52 shows sharp vertices for the subdivision curve, it is reminded that each respective edge and vertex of the subdivision curve corresponds to a topological edge and vertex (*i.e.* there is a one to one mapping), so identification of the sharp vertices on the subdivision curve or its base mesh yields identification of the sharp vertices in the CAD curve format. FIG. 53 shows detected sharp vertices within the vertices of the base mesh (BM vertices) for the subdivision curve shown on FIG. 52. FIG. 54 shows the given curve resulting from the conversion of the subdivision curve shown on FIG. 53, and FIG. 55 shows its topology. To do this detection and identification, the method may perform a parsing of the base mesh to retrieve the sharpness attribute for each vertex of the mesh (this is an attribute which is stored on each vertex).

Further to the detection and identification of the sharp vertices, the method then comprises splitting the given curve according to the identified sharp vertices so as to split the given curve into curves each bounded by either two sharp vertices or one sharp vertex and a boundary vertex. The curves resulting from the splitting form a partition of the given curve. The converting, applying and converting back steps are then applied based on the curves resulting from the splitting. By that it is meant, that these steps are applied for the curves resulting from the splitting and which are to be affected by the CAD deformation operator. These steps may not be applied to the other curves, which may however be used in a final curve reconstruction step as discussed hereinbelow. Which curves are to be affected by the CAD deformation operator depends on the operator and/or on where on the given curve the designer wants to apply the operator. For example, in the case of a matching operator, there may be a single curve affected by the operator, which is one of the curves that comprise a boundary vertex. For each curve resulting from the splitting and which is to be affected by the operator: the method converts this curve into a format readable by the CAD deformation operator, then applies the CAD operator to this converted curve, and then converts back the results into the CAD curve format. This splitting thereby allows to stop the deformation operation (performed by the deformation operator) at sharp vertices, thereby avoiding destabilization of other parts of the given curve. This is illustrated on FIG. 56 for an example of a matching deformation operator.

It is to be understood that this detection of sharp vertex and then splitting of the given curve is not performed if the given curve does not feature any sharp vertex. It may be performed only if there is at least one sharp vertex in the given curve.

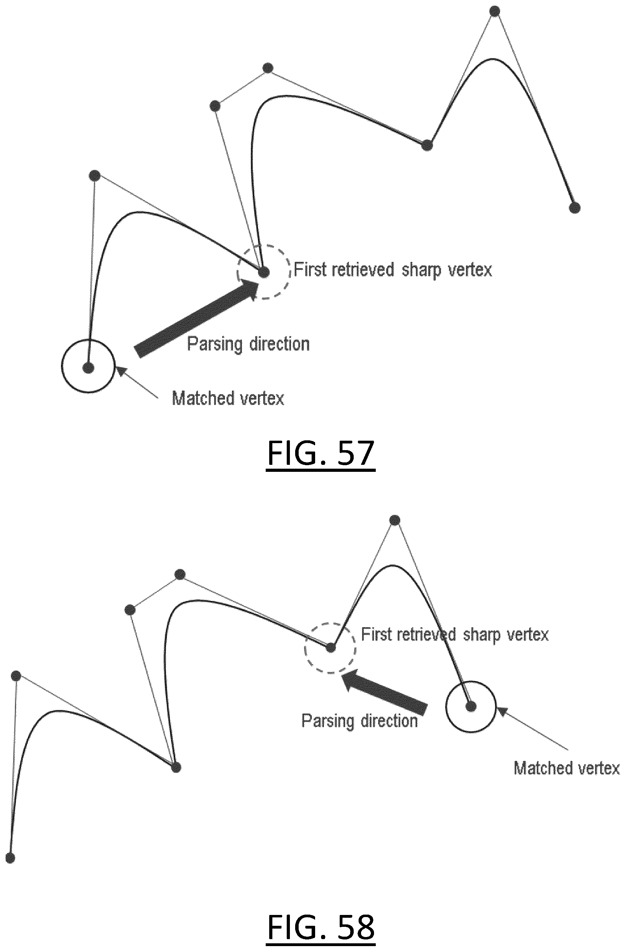

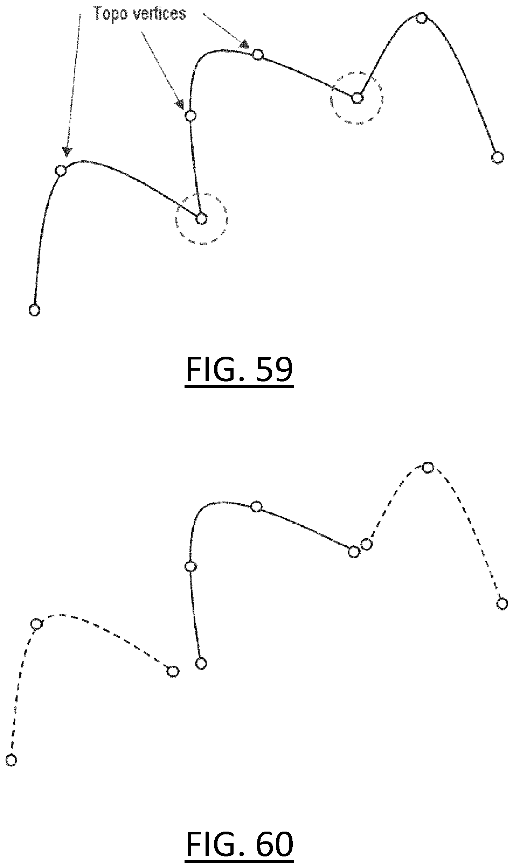

In implementations of the detection of sharp vertices and subsequent splitting, if the deformation operator is applied on the first vertex of the given curve (as illustrated on FIG. 57 for a matching operator), the vertices of the base mesh are parsed from the second point to the (N-1)$^{th}$ point, where N is the number of points (the points going from point 1 to point N) of the base mesh. If the deformation is performed on the last vertex of the given curve (as illustrated on FIG. 58 for the matching operator), the vertices of the base mesh are parsed in the reversed way (from point N-1 to point 2). In both cases, the parsing stops at the first retrieved sharp vertex, and the splitting is performed at this sharp vertex only. FIG.s 57 and 58 show the retrieved sharp vertex (circled by a dotted line) where the splitting is performed. If the deformation operator applies a deformation on both sides (that is on both curves that comprise a boundary vertex), then the detection is performed on both directions: from vertex 2 to vertex N-1 until a sharp vertex is found, and from vertex N-1 to 2 until a sharp vertex is found. The splitting is then performed on these two first sharp vertices found in the two directions (which yields three curves, the curves between the two sharp vertices being not affected by the deformation). This last case is illustrated on FIG. 59, which shows that all two first sharp vertices (still circled by a dotted line) are identified (one per direction), and FIG. 60, which shows the splitting performed at each such sharp vertex, thereby splitting the given curve into three curves. It is to be noted that the vertices are not moved, contrary to what is shown in the figures. This is merely for the purpose of illustration.

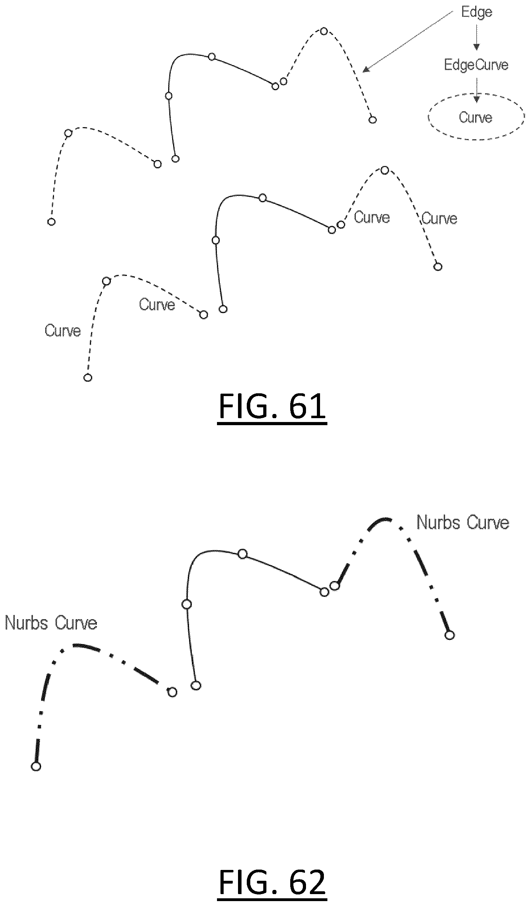

The conversion of the given curve may comprise concatenating the unitary curves (each being a Bezier curve corresponding to a respective edge of the base mesh and pointed by a respective topological edge). The unitary curves are concatenated into one or more single NURBS curves. More specifically, if the given curve does not comprise any sharp vertex, then all the unitary curves are concatenated into a single NURBS curve. If the curve comprises at least one sharp vertex, then for each respective curve resulting from the above-described splitting and which is to be affected by the operator, the unitary curves of the given curve that form this respective curve are concatenated in a respective NURBS curve. Since unitary curves of the given curve are G2 continuous, the concatenation is deviation-free. The concatenation thus yields one or more single NURBS curve each corresponding to a curve resulting from the splitting (or a single NURBS curve resulting from the given curve if there is no sharp vertex) which are mono-cells (pointed by a single topological object, *e.g.* a mesh), as a result of the concatenation. These curves are compatible with the CAD deformation operator. FIG. 61 illustrates the resulting mono-cell topology that results from the concatenation.

Since unitary curves of the given curve are G2 continuous, the concatenation is deviation-free. Specifically, as the given curve is, by construction (*e.g.* as a result of the conversion method disclosed in European Patent Application EP23306674.5), G2 continuous internally, this means that all the NURBS curves are G2 connected. As a result, the concatenation of the curves may be processed with no deviation. This concatenation creates NURBS curves that fits the inputs Bezier curves, as illustrated on FIG. 62.

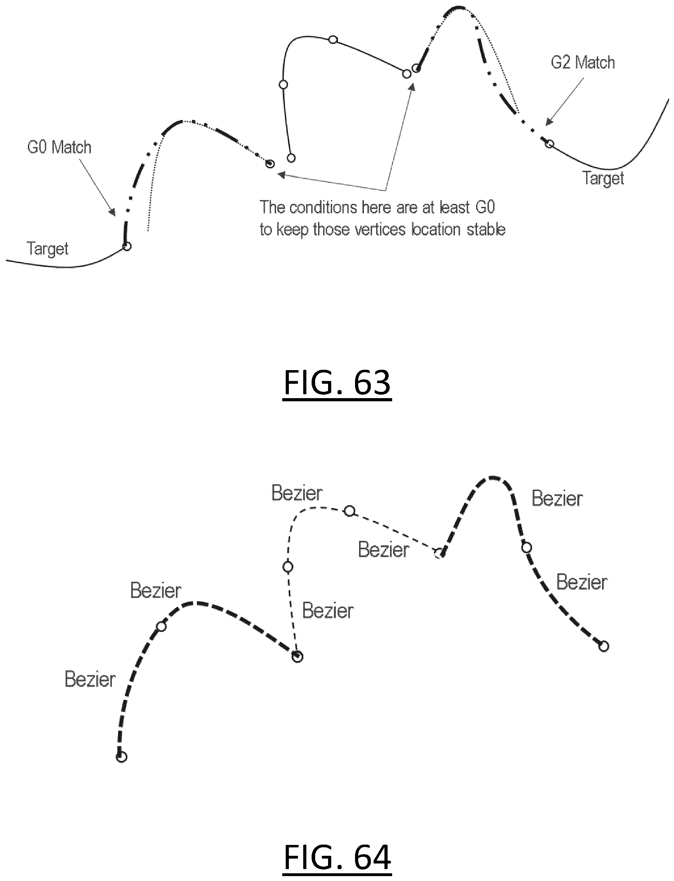

The method then further comprises applying the deformation operator to the converted given curve, *e.g.* to each NURBS resulting from the concatenation. This step is known in the art and consists in the known application of a known CAD deformation operator to a curve (or more) having a suitable format, for example the NURBS resulting from the concatenation. The method may however, for each NURBS, ensure to maintain stable the vertices which are opposite to vertices affected by the deformation, for example by imposing a continuity condition. This is illustrated on FIG. 63.

The method then comprises converting back the result of applying the CAD deformation operator into the CAD curve format. The method may for that convert each NURBS curve resulting from the concatenation and on which the operator has been applied back into the CAD curve format. For that, the method may comprise exploding the NURBS curves each into unitary curves. This may comprise breaking the NURBS at their arc limits' locations (which corresponds to the limits between the unitary curves, or to the limits between the base mesh edges). This results into unitary curves (Bezier curves), which correspond to the given unitary curves of the given curve. Specifically, as previously said, the concatenation of the unitary curves is applied either to all the given curve (when there is no sharp vertex) or to curves resulting from the splitting and affected by the deformation. In the first alternative, the converting back explodes the single NURBS curve (once having undergone the operator) that results from the concatenation of all the unitary curves back into those unitary curves. In the second alternative, this exploding may only be performed for each NURBS curve resulting from the concatenation of the unitary curves forming a respective curve resulting from the splitting and affected by the deformation, the exploding yielding back these unitary curves. For these other curves resulting from the splitting and which have not undergone the concatenation, their unitary curves may for example been saved after the splitting and remain unchanged through the subsequent steps of the method. The unitary curves resulting from the exploding thus corresponds to the given unitary curves, *i.e.* there is the same number of unitary curves after the exploding than there was prior to the concatenation, and the unitary curves after the exploding correspond to the same topological edges of the subdivision curve than their corresponding unitary curves prior to the concatenation. FIG. 64 shows the result of the explosion applied to the curve shown on FIG. 63.

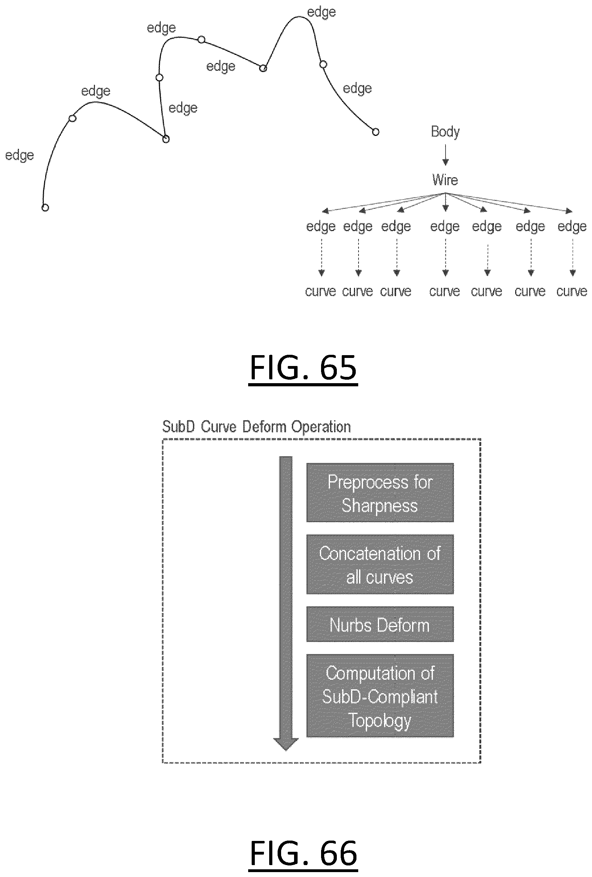

The method may further comprise a final reconstruction step that puts all the unitary curves together and rebuilds the subdivision curve (in a CAD format) topology. FIG. 65 shows the result of this rebuilding for the curve shown on FIG. 64.

FIG. 66 shows a flowchart of an example of the method.

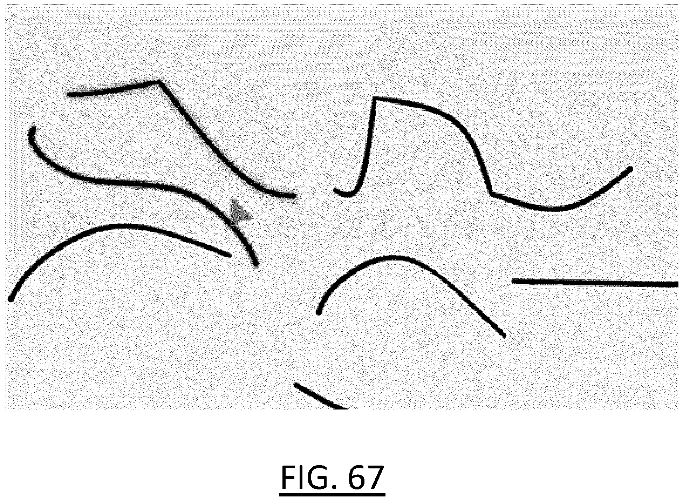

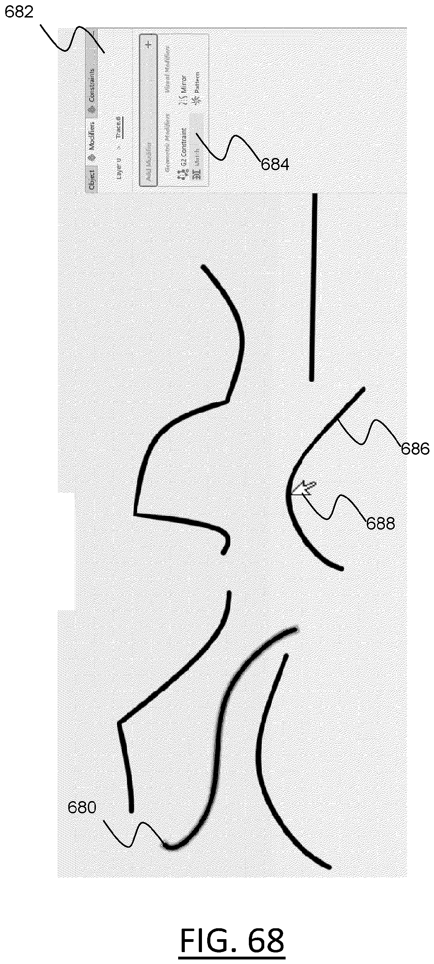

FIG.s 67 to 70 are screenshots of design steps on a CAD software and illustrate the deformation method. FIG. 67 shows several subdivision curves (in the CAD curve format) displayed on the screen of the CAD software. On FIG. 68, the user, has selected curve 680, and, upon activation of an appropriate command, has opened a widget 682 for applying CAD deformation operators.

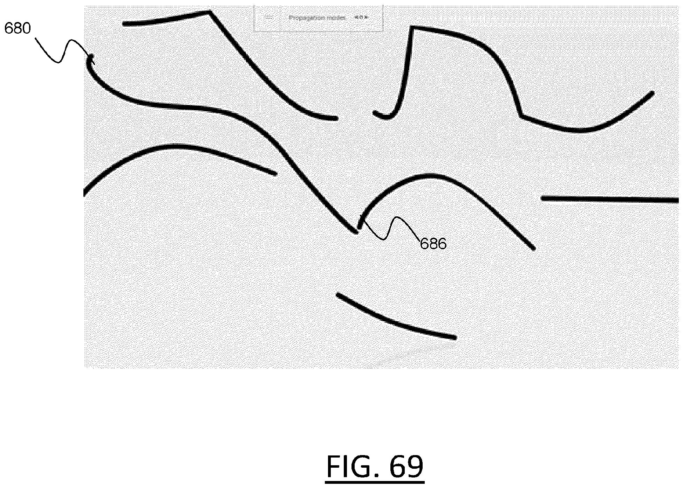

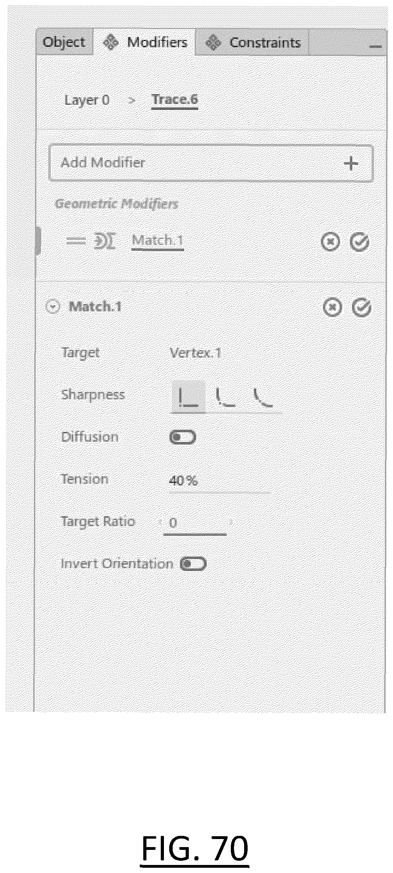

The user has selected the matching operator 682, and FIG. 68 shows the user currently selecting curve 686 by positioning cursor 688 on the curve 686 and clicking on the curve. Upon the user selecting the curve 686, this curve is matched with the previously selected curve 680. The result of the matching is shown on FIG. 69. FIG. 70 shows a display of the widget 682 once the matching operation has been performed as shown on FIG. 69. As can be seen the user can easily modify properties of the matching operator (*e.g.* select a sharpness, diffusing the matching, apply a desired tension). As illustrated by FIG.s 67 to 70, the user only sees the displayed subdivision curves and the widget for applying CAD deformation operators. During application of a CAD deformation operator, the steps of the method are performed automatically and as a background process, and are transparent to the user, which sees the results in real-time (*e.g.* up to normal, short, processing time for performing the method).

"Designing a manufacturing product (or product to be manufactured)/mechanical part/mechanical product" designates any action or series of actions which is at least a part of a process of elaborating a modeled object (3D or 2D) of the manufacturing product/mechanical part/mechanical product. The method may be part of such process, the method forming a design step where a CAD deformation operator is applied.

The methods thus generally manipulate modeled objects, such as the subdivision curve, the CAD model, of the CAD curve format discussed herein. A modeled object is any object defined by data stored e.g. in the database. By extension, the expression "modeled object" designates the data itself. According to the type of the system, the modeled objects may be defined by different kinds of data. The system may indeed be any combination of a CAD system, a CAE system, a CAM system, a PDM system and/or a PLM system. In those different systems, modeled objects are defined by corresponding data. One may accordingly speak of CAD object, PLM object, PDM object, CAE object, CAM object, CAD data, PLM data, PDM data, CAM data, CAE data. However, these systems are not exclusive one of the other, as a modeled object may be defined by data corresponding to any combination of these systems. A system may thus well be both a CAD, CAE, PLM and/or CAM system, as will be apparent from the definitions of such systems provided below.

By CAD solution (*e.g.* a CAD system or a CAD software), it is additionally meant any system, software or hardware, adapted at least for designing a modeled object on the basis of a graphical representation of the modeled object and/or on a structured representation thereof (*e.g.* a feature tree), such as CATIA. In this case, the data defining a modeled object comprise data allowing the representation of the modeled object. A CAD system may for example provide a representation of CAD modeled objects using edges or lines, in certain cases with faces or surfaces. Lines, edges, or surfaces may be represented in various manners, e.g. non-uniform rational B-splines (NURBS). Specifically, a CAD file contains specifications, from which geometry may be generated, which in turn allows for a representation to be generated. Specifications of a modeled object may be stored in a single CAD file or multiple ones. The typical size of a file representing a modeled object in a CAD system is in the range of one Megabyte per part. And a modeled object may typically be an assembly of thousands of parts.

In the context of CAD, a modeled object may typically be a 2D or 3D modeled object, e.g. representing a product such as a part or an assembly of parts, or possibly an assembly of products. The 2D or 3D modeled object may be a manufacturing product, *i.e.* a product to be manufactured. By "3D modeled object", it is meant any object which is modeled by data allowing its 3D representation. A 3D representation allows the viewing of the part from all angles. For example, a 3D modeled object, when 3D represented, may be handled and turned around any of its axes, or around any axis in the screen on which the representation is displayed. This notably excludes 2D icons, which are not 3D modeled. The display of a 3D representation facilitates design (i.e. increases the speed at which designers statistically accomplish their task). This speeds up the manufacturing process in the industry, as the design of the products is part of the manufacturing process.

The 2D or 3D modeled object may represent the geometry of a product to be manufactured in the real world subsequent to the completion of its virtual design with for instance a CAD/CAE software solution or CAD/CAE system, such as a (e.g. mechanical) part or assembly of parts (or equivalently an assembly of parts, as the assembly of parts may be seen as a part itself from the point of view of the method, or the method may be applied independently to each part of the assembly), or more generally any rigid body assembly (e.g. a mobile mechanism). A CAD/CAE software solution allows the design of products in various and unlimited industrial fields, including: aerospace, architecture, construction, consumer goods, high-tech devices, industrial equipment, transportation, marine, and/or offshore oil/gas production or transportation. The 3D modeled object designed by the method may thus represent an industrial product which may be any mechanical part, such as a part of a terrestrial vehicle (including e.g. car and light truck equipment, racing cars, motorcycles, truck and motor equipment, trucks and buses, trains), a part of an aerial vehicle (including e.g. airframe equipment, aerospace equipment, propulsion equipment, defense products, airline equipment, space equipment), a part of a naval vehicle (including e.g. navy equipment, commercial ships, offshore equipment, yachts and workboats, marine equipment), a general mechanical part (including e.g. industrial manufacturing machinery, heavy mobile machinery or equipment, installed equipment, industrial equipment product, fabricated metal product, tire manufacturing product), an electro-mechanical or electronic part (including e.g. consumer electronics, security and/or control and/or instrumentation products, computing and communication equipment, semiconductors, medical devices and equipment), a consumer good (including e.g. furniture, home and garden products, leisure goods, fashion products, hard goods retailers' products, soft goods retailers' products), a packaging (including e.g. food and beverage and tobacco, beauty and personal care, household product packaging).

A CAD system may be history-based. In this case, a modeled object is further defined by data comprising a history of geometrical features. A modeled object may indeed be designed by a physical person (i.e. the designer/user) using standard modeling features (e.g. extrude, revolute, cut, and/or round) and/or standard surfacing features (e.g. sweep, blend, loft, fill, deform, and/or smoothing). Many CAD systems supporting such modeling functions are history-based system. This means that the creation history of design features is typically saved through an acyclic data flow linking the said geometrical features together through input and output links. The history based modeling paradigm is well known since the beginning of the 80's. A modeled object is described by two persistent data representations: history and B-rep (i.e. boundary representation). The B-rep is the result of the computations defined in the history. The shape of the part displayed on the screen of the computer when the modeled object is represented is (e.g. a tessellation of) the B-rep. The history of the part is the design intent. Basically, the history gathers the information on the operations which the modeled object has undergone. The B-rep may be saved together with the history, to make it easier to display complex parts. The history may be saved together with the B-rep in order to allow design changes of the part according to the design intent.

By PLM system, it is additionally meant any system adapted for the management of a modeled object representing a physical manufactured product (or product to be manufactured). In a PLM system, a modeled object is thus defined by data suitable for the manufacturing of a physical object. These may typically be dimension values and/or tolerance values. For a correct manufacturing of an object, it is indeed better to have such values.

By CAE solution, it is additionally meant any solution, software of hardware, adapted for the analysis of the physical behavior of a modeled object. A well-known and widely used CAE technique is the Finite Element Model (FEM) which is equivalently referred to as CAE model hereinafter. An FEM typically involves a division of a modeled object into elements, i.e., a finite element mesh, which physical behaviors can be computed and simulated through equations. Such CAE solutions are provided by Dassault Systèmes under the trademark SIMULIA®. Another growing CAE technique involves the modeling and analysis of complex systems composed a plurality of components from different fields of physics without CAD geometry data. CAE solutions allow the simulation and thus the optimization, the improvement and the validation of products to manufacture. Such CAE solutions are provided by Dassault Systèmes under the trademark DYMOLA®. CAE may be used to ensure that various structural requirements (such as, but not limited to, mass, stiffness, strength, durability) are achieved by a new CAD model. Some of these requirements may be called Key Performance Indicators (KPIs). For many industrial products (for example cars, airplanes, consumer packaged goods, hi-tech), these KPIs are in conflict e.g. lower mass usually causes lower stiffness. Thus, optimization methods are often applied to find the best trade-off between the KPIs.

By CAM solution, it is meant any solution, software of hardware, adapted for managing the manufacturing data of a product. The manufacturing data generally include data related to the product to manufacture, the manufacturing process and the required resources. A CAM solution is used to plan and optimize the whole manufacturing process of a product. For instance, it may provide the CAM users with information on the feasibility, the duration of a manufacturing process or the number of resources, such as specific robots, that may be used at a specific step of the manufacturing process; and thus allowing decision on management or required investment. CAM is a subsequent process after a CAD process and potential CAE process. For example, a CAM solution may provide the information regarding machining parameters, or molding parameters coherent with a provided extrusion feature in a CAD model. Such CAM solutions are provided by Dassault Systèmes under the trademarks CATIA, Solidworks or trademark DELMIA®.

CAD and CAM solutions are therefore tightly related. Indeed, a CAD solution focuses on the design of a product or part and CAM solution focuses on how to make it. Designing a CAD model is a first step towards a computer-aided manufacturing. Indeed, CAD solutions provide key functionalities, such as feature based modeling and boundary representation (B-Rep), to reduce the risk of errors and the loss of precision during the manufacturing process handled with a CAM solution. Indeed, a CAD model is intended to be manufactured. Therefore, it is a virtual twin, also called digital twin, of an object to be manufactured with two objectives:

- checking the correct behavior of the object to be manufactured in a specific environment; and
- ensuring the manufacturability of the object to be manufactured.

PDM stands for Product Data Management. By PDM solution, it is meant any solution, software of hardware, adapted for managing all types of data related to a particular product. A PDM solution may be used by all actors involved in the lifecycle of a product: primarily engineers but also including project managers, finance people, sales people and buyers. A PDM solution is generally based on a product-oriented database. It allows the actors to share consistent data on their products and therefore prevents actors from using divergent data. Such PDM solutions are provided by Dassault Systèmes under the trademark ENOVIA®.

As previously explained, the method manipulates a CAD object (the given curve) and outputs a CAD object (the given curve) which may form or may be included in a CAD model. A CAD model may comprise or consist in a feature tree and/or a B-rep. Such a model may stem from a CAE model and may results from a CAE to CAD conversion process.

The CAD model may be feature-based (*e.g.* it may comprise a feature tree, and optionally a corresponding B-rep obtained by executing the feature tree). A feature-based 3D model allows (*e.g.* during the determination of a manufacturing file or CAM file as discussed hereinafter) the detection and an automatic resolution of a geometry error in a CAD model such as a clash that will affect the manufacturing process. A clash is an interpenetration between two parts of a 3D model for example due to their relative motion. Furthermore, this clash may sometimes only be detected via a finite element analysis based on the CAD feature-based model. Therefore, a resolution of a clash can be performed with or automatically by the CAD solution by iteratively modifying the parameters of the features and doing a finite element analysis.

As another example, a feature-based 3D model allows (*e.g.* during the determination of a manufacturing file or CAM file as discussed hereinafter) an automatic creation of a toolpath for a machine via a computer numerical control (CNC). With CNC, each object to be manufactured gets a custom computer program, stored in and executed by the machine control unit, a microcomputer attached to the machine. The program contains the instructions and parameters the machine tool will follow. Mills, lathes, routers, grinders and lasers are examples of common machine tools whose operations can be automated with CNC.

A key characteristic of a CAD model is that it may be designed exactly and unambiguously by chaining a small number of high-level parameterized design operations (including for example, but to limited to, sketch, extrusion, chamfer) and edited by modifying its high-level parameters. That this is a key distinction with the polyhedral representations such as a triangular surface mesh which may represent any 3D shape but do not provide modification or parameterization capabilities required in an industrial design context.

As CAD model is a parameterized model of a part/product, it is lighter in terms of memory footprint than other models such as a CAE model. Indeed, instead of storing a collection of discrete geometrical elements such as finite elements, a CAD model allows the storing of a list of features and parameters, which is lighter in terms of storage and memory footprint. Working on CAD models thus reduced memory requirements for the underlying systems, as compared for example to CAE models, in addition to facilitate editability of the model. This amounts to say that a CAE to CAD conversion process in fact compresses the CAE model into a CAD model which is lighter in terms of memory requirements (e.g. footprint), in addition to transforming the CAE model into a more easily editable CAD model.

The generation of a custom computer program from CAD files may be automated. Such generation may therefore be errorproof and may ensure a perfect reproduction of the CAD model to a manufactured product. CNC is considered to provide more precision, complexity and repeatability than is possible with manual machining. Other benefits include greater accuracy, speed and flexibility, as well as capabilities such as contour machining, which allows milling of contoured shapes, including those produced in 3D designs.

The B-rep (i.e. boundary representation) is a 3D representation of a mechanical part. Specifically, the B-rep is a persistent data representation describing the 3D modeled object representing the mechanical part. The B-rep may be the result of computations and/or a series of operations carried out during a designing phase of the 3D modeled object representing the mechanical part. The shape of the mechanical part displayed on the screen of the computer when the modeled object is represented is (e.g. a tessellation of) the B-rep. In examples, the B-rep represents a part of the model object.

A B-Rep includes topological entities and geometrical entities. Topological entities are: face, edge, and vertex. Geometrical entities are 3D objects: surface, plane, curve, line, point. By definition, a face is a bounded portion of a surface, named the supporting surface. An edge is a bounded portion of a curve, named the supporting curve. A vertex is a point in 3D space. They are related to each other as follows. The bounded portion of a curve is defined by two points (the vertices) lying on the curve. The bounded portion of a surface is defined by its boundary, this boundary being a set of edges lying on the surface. The boundary of the edges of the face are connected by sharing vertices. Faces are connected by sharing edges. Two faces are adjacent if they share an edge. Similarly, two edges are adjacent if they share a vertex. In the CAD system, the B-Rep gathers in an appropriate data structure the "is bounded by" relationship, the relationship between topological entities and supporting geometries, and mathematical descriptions of supporting geometries. An internal edge of a B-Rep is an edge shared by exactly two faces. By definition, a boundary edge is not shared, it bounds only one face. By definition, a boundary face is bounded by at least one boundary edge. A B-Rep is said to be closed if all its edges are internal edges. A B-Rep is said to be open is it includes at least one boundary edge. A closed B-Rep is used to model a thick 3D volume because it defines the inside portion of space (virtually) enclosing material. An open B-Rep is used to model a 3D skin, which represents a 3D object the thickness of which is sufficiently small to be ignored.

A key advantage of the B-Rep over any other representation types used in CAD modeling is its ability to represent arbitrary shapes exactly. All other representations in use, such as point clouds, distance fields and meshes, perform an approximation of the shape to represent by discretization. The B-Rep, on the other hand, contains surface equations that represent the exact design and therefore constitutes a true "master model" for further manufacturing, whether this be generation of toolpaths for CNC, or discretizing into the correct sample density for a given 3D Printer technology. In other words, by using a B-Rep, the 3D model may be an exact representation of the manufactured object. The B-Rep is also advantageous for simulating the behavior of a 3D model. In terms of stress, thermal, electromagnetic or other analysis, it supports local refinement of the simulation meshes to capture physical phenomena, and for kinematics it supports true contact modeling between curved surfaces. Finally, a B-Rep allows a small memory and/or file footprint. First, because the representation contains surfaces based only on parameters. In other representations such as meshes, the equivalent surface comprises up to thousands of triangles. Second, because a B-Rep doesn't contain any history-based information.

The deformation method may be included in a production process, which may comprise, after performing the method, producing a physical product corresponding to a CAD model including the given curve. The production process may comprise the following steps:

- (e.g. automatically) performing the method;
- using the obtained CAD model for manufacturing the part/product.

Using a CAD model for manufacturing designates any real-world action or series of action that is/are involved in/participate to the manufacturing of the product/part represented by the CAD model. Using the CAD model for manufacturing may for example comprise the following steps:

- editing the obtained CAD model;
- performing simulation(s) based on the CAD model or on a corresponding CAE model (*e.g.* the CAE model from which the CAD model stems, after a CAE to CAD conversion process), such as simulations for validation of mechanical, use and/or manufacturing properties and/or constraints *(e.g.* structural simulations, thermodynamics simulation, aerodynamic simulations);
- editing the CAD model based on the results of the simulation(s);
- optionally (*i.e.* depending on the manufacturing process used, the production of the mechanical product may or may not comprise this step), (*e.g.* automatically) determining a manufacturing file/CAM file based on the (*e.g.* edited) CAD model, for production/manufacturing of the manufacturing product;
- sending the CAD file and/or the manufacturing file/CAM file to a factory; and/or
- (*e.g.* automatically) producing/manufacturing, based on the determined manufacturing file/CAM file or on the CAD model, the mechanical product originally represented by the model outputted by the method. This may include feeding (*e.g.* automatically) the manufacturing file/CAM file and/or the CAD file to the machine(s) performing the manufacturing process.

This last step of production/manufacturing may be referred to as the manufacturing step or production step. This step manufactures/fabricates the part/product based on the CAD model and/or the CAM file, *e.g.* upon the CAD model and/or CAD file being fed to one or more manufacturing machine(s) or computer system(s) controlling the machine(s). The manufacturing step may comprise performing any known manufacturing process or series of manufacturing processes, for example one or more additive manufacturing steps, one or more cutting steps (e.g. laser cutting or plasma cutting steps), one or more stamping steps, one or more forging steps, one or more bending steps, one or more deep drawing steps, one or more molding steps, one or more machining steps (e.g. milling steps) and/or one or more punching steps. Because the design method improves the design of a model (CAE or CAD) representing the part/product, the manufacturing and its productivity are also improved.

Editing the CAD model may comprise, by a user (*i.e.* a designer), performing one or more editions of the CAD model, *e.g.* by using a CAD solution. The modifications of the CAD model may include one or more modifications each of a geometry and/or of a parameter of the CAD model. The modifications may include any modification or series of modifications performed on a feature tree of the model (*e.g.* modification of feature parameters and/or specifications) and/or modifications performed on a displayed representation of the CAD model (*e.g.* a B-rep). The modifications are modifications which maintain the technical functionalities of the part/product, *i.e.* the user performs modifications which may affect the geometry and/or parameters of the model but only with the purpose of making the CAD model technically more compliant with the downstream use and/or manufacturing of the part/product. Such modifications may include any modification or series of modification that make the CAD model technically compliant with specifications of the machine(s) used in the downstream manufacturing process. Such modifications may additionally or alternatively include any modification or series of modification that make the CAD model technically compliant with a further use of the product/part once manufactured, such modification or series of modifications being for example based on results of the simulation(s).

The CAM file may comprise a manufacturing step up model obtained from the CAD model. The manufacturing step up may comprise all data required for manufacturing the mechanical product so that it has a geometry and/or a distribution of material that corresponds to what is captured by the CAD model, possibly up to manufacturing tolerance errors. Determining the production file may comprise applying any CAM (Computer-Aided Manufacturing) or CAD-to-CAM solution for (*e.g.* automatically) determining a production file from the CAD model (*e.g.* any automated CAD-to-CAM conversion algorithm). Such CAM or CAD-to-CAM solutions may include one or more of the following software solutions, which enable automatic generation of manufacturing instructions and tool paths for a given manufacturing process based on a CAD model of the product to manufacture:

- Fusion 360,
- FreeCAD,
- CATIA,
- SOLIDWORKS,
- The NC Shop Floor programmer of Dassault Systèmes illustrated on https://my.3dexperience.3ds. com/welcome/fr/compass-world/rootroles/nc-shop-floor-programmer,
- The NC Mill-Turn Machine Programmer of Dassault Systèmes illustrated on https://my.3dexperien ce.3ds.com/welcome/fr/compass-world/rootroles/ nc-mill-turn-machine-programmer, and/or
- The Powder Bed Machine Programmer of Dassault Systèmes illustrated on https://my.3dexperien ce.3ds.com/welcome/fr/compass-world/rootroles/ powder-bed-machine-programmer.

The product/part may be an additive manufacturable part, *i.e.* a part to be manufactured by additive manufacturing (*i.e.* 3D printing). In this case, the production process does not comprise the step of determining the CAM file and directly proceeds to the producing/manufacturing step, by directly (*e.g.* and automatically) feeding a 3D printer with the CAD model. 3D printers are configured for, upon being fed with a CAD model representing a mechanical product (*e.g.* and upon launching, by a 3D printer operator, the 3D printing), directly and automatically 3D print the mechanical product in accordance with the CAD model. In other words, the 3D printer receive the CAD model, which is (*e.g.* automatically) fed to it, reads (*e.g.* automatically) the CAD model, and prints (*e.g.* automatically) the part by adding together material, *e.g.* layer by layer, to reproduce the geometry and/or distribution of material captured by the CAD model. The 3D printer adds the material to thereby reproduce exactly in reality the geometry and/or distribution of material captured by the CAD model, up to the resolution of the 3D printer, and optionally with or without tolerance errors and/or manufacturing corrections. The manufacturing may comprise, *e.g.* by a user (*e.g.* an operator of the 3D printer) or automatically (by the 3D printer or a computer system controlling it), determining such manufacturing corrections and/or tolerance errors, for example by modifying the CAD file to match specifications of the 3D printer. The production process may additionally or alternatively comprise determining (*e.g.* automatically by the 3D printer or a computer system controlling it) from the CAD model, a printing direction, for example to minimize overhang volume (as described in European patent No. 3327593, which is incorporated herein by reference), a layer-slicing (i.e., determining thickness of each layer, and layer-wise paths/trajectories and other characteristics for the 3D printer head (e.g., for a laser beam, for example the path, speed, intensity/temperature, and other parameters).

The product/part may alternatively be a machined part (*i.e.* a part manufactured by machining), such as a milled part (*i.e.* a part manufactured by milling). In such a case, the production process may comprise a step of determining the CAM file. This step may be carried out automatically, by any suitable CAM solution to automatically obtain a CAM file from a CAD model of a machined part. The determination of the CAM file may comprise (*e. g.* automatically) checking if the CAD model has any geometric particularity (*e.g.* error or artefact) that may affect the production process and (*e.g.* automatically) correcting such particularities. For example, machining or milling based on the CAD model may not be carried out if the CAD model still comprises sharp edges (because the machining or milling tool cannot create sharp edges), and in such a case the determination of the CAM file may comprise (*e.g.* automatically) rounding or filleting such sharp edges *(e.g.* with a round or fillet radius that corresponds, *e.g.* substantially equals up to a tolerance error, the radius of the cutting head of the machining tool), so that machining or milling based on the CAD model can be done. More generally, the determination of the CAM file may automatically comprise rounding or filleting geometries within the CAD model that are incompatible with the radius of the machining or milling tool, to enable machining/milling. This check and possible corrections (*e.g.* rounding or filleting of geometries) may be carried out automatically as previously discussed, but also, by a user (*e.g.* a machining engineer), which performs the correction by hand on a CAD and/or CAM solution, *e.g.* the solution constraining the user to perform corrections that make the CAD model compliant with specifications of the tool used in the machining process.

Further to the check, the determination of the CAM file may comprise (*e.g.* automatically) determining the machining or milling path, *i.e.* the path to be taken by the machining tool to machine the product. The path may comprise a set of coordinates and/or a parameterized trajectory to be followed by the machining tool for machining, and determining the path may comprise (*e.g.* automatically) computing these coordinates and/or trajectory based on the CAD model. This computation may be based on the computation of a boundary of a Minkowski subtraction of the CAD model by a CAD model representation of the machining tool, as for example discussed in European Patent Application EP21306754.9 filed on 13 December 2021 by Dassault Systèmes, and which is incorporated herein by reference. It is to be understood that the path may be a single path, *e.g.* that the tool continuously follows without breaking contact with the material to be cut. Alternatively, the path may be a concatenation of a sequence sub-paths to be followed in a certain order by the tool, *e.g.* each being continuously followed by the tool without breaking contact with the material to be cut. Optionally, the determination of the CAM file may then comprise (*e.g.* automatically) setting machine parameters, including cutting speed, cut/pierce height, and/or mold opening stroke, for example based on the determined path and on the specification of the machine. Optionally, the determination of the CAM file may then comprise (*e.g.* automatically) configuring nesting where the CAM solution decides the best orientation for a part to maximize machining efficiency.

In this case of a machining or milling part, the determining of the CAM file thus results in, and outputs, the CAM file comprising a machining path, and optionally the set machine parameters and/or specifications of the configured nesting. This outputted CAM file may be then (*e.g.* directly and automatically) fed to the machining tool and/or the machining tool may then (*e.g.* directly and automatically) be programmed by reading the file, upon which the production process comprises the producing/manufacturing step where the machine performs the machining of the product according to the production file, *e.g.* by directly and automatically executing the production file. The machining process comprises the machining tool cutting a real-world block of material to reproduce the geometry and/or distribution of material captured by the CAD model, *e.g.* up to a tolerance error (*e.g.* tens of microns for milling).

The product/part may alternatively be a molded part, *i.e.* a part manufactured by molding (*e.g.* injection-molding). In such a case, the production process may comprise the step of determining the CAM file. This step may be carried out automatically, by any suitable CAM solution to automatically obtain a CAM file from a CAD model of a molded part. The determining of the CAM file may comprise (*e.g.* automatically) performing a sequence of molding checks based on the CAD model to check that the geometry and/or distribution of material captured by the CAD model is adapted for molding, and (*e.g.* automatically) performing the appropriate corrections if the CAD model is not adapted for molding. Performing the checks and the appropriate corrections (if any) may be carried out automatically, or, alternatively, by a user (*e.g.* a molding engineer), for example using a CAD and/or CAM solution that allows a user to perform the appropriate corrections on the CAD model but constraints him/her corrections that make the CAD model compliant with specifications of the molding tool(s). The checks may include: verifying that the virtual product as represented by the CAD model is consistent with the dimensions of the mold and/or verifying that the CAD model comprises all the draft angles required for demolding the product, as known *per se* from molding. The determining of the CAM file may then further comprise determining, based on the CAD model, a quantity of liquid material to be used for molding, and/or a time to let the liquid material harden/set inside the mold, and outputting a CAM file comprising these parameters. The production process then comprises (*e.g.* automatically) performing the molding based on the outputted file, where the mold shapes, for the determined hardening time, a liquid material into a shape that corresponds to the geometry and/or distribution of material captured by the CAD model, *e.g.* up to a tolerance error (*e.g.* up to the incorporation of draft angles or to the modification of draft angles, for demolding).

The product/part may alternatively be a stamped part, also possibly referred to as "stamping part", *i.e.* a part to be manufactured in a stamping process. The production process may in this case comprise (*e.g.* automatically) determining a CAM file based on the CAD model. The CAD model represents the stamping part, *e.g.* possible with one or more flanges if the part is to comprise some, and possibly in this latter case with extra material to be removed so as to form an unfolded state of one or more flanges of the part, as known *per se* from stamping. The CAD model thus comprises a portion that represents the part without the flanges (which is the whole part in some cases) and possibly an outer extra patch portion that represents the flanges (if any), with possibly the extra material (if any). This extra patch portion may present a g2-continuity over a certain length and then a g1-continuity over a certain length.

The determination of the CAM file may in this stamping case comprise (*e.g.* automatically) determining parameters of the stamping machine, for example a size of a stamping die or punch and/or a stamping force, based on the geometry and/or distribution of material of the virtual product as captured by the CAD model. If the CAD model also comprises the representation of the extra material to be removed so as to form an unfolded state of one or more flanges of the part, the extra material to be removed may for example be cut by machining, and determining the CAM file may also comprise determining a corresponding machining CAM file, *e.g.* as discussed previously. If there are one or more flanges, determining the CAM file may comprise determining geometrical specifications of the g2-continuity and g1-continuity portions that allow, after the stamping itself and the removal of the extra material, to fold in a folding process the flanges towards an inner surface of the stamped part and along the g2-continuity length. The CAM file thereby determined may thus comprise: parameters of the stamping tool, optionally said specifications for folding the flanges (if any), and optionally a machining production file for removing the extra material (if any).

The stamping production process may then output, *e.g.* directly and automatically, the CAM file, and perform the stamping process (*e.g.* automatically) based on the file. The stamping process may comprise stamping (*e.g.* punching) a portion of material to form the product as represented by the CAD file, that is possibly with the unfolded flanges and the extra material (if any). Where appropriate, the stamping process may then comprise cutting the extra material based on the machining production file and folding the flanges based on said specifications for folding the flanges, thereby folding the flanges on their g2-continuity length and giving a smooth aspect to the outer boundary of the part. In this latter case, the shape of the part once manufactured differ from its virtual counterpart as represented by the CAD model in that the extra material is removed and the flanges are folded, whereas the CAD model represents the part with the extra material and the flanges in an unfolded state.

The methods herein are computer-implemented. This means that steps (or substantially all the steps) of the methods are executed by at least one computer, or any system alike. Thus, steps of the methods are performed by the computer, possibly fully automatically, or, semi-automatically. In examples, the triggering of at least some of the steps of the methods may be performed through user-computer interaction. The level of user-computer interaction required may depend on the level of automatism foreseen and put in balance with the need to implement user's wishes. In examples, this level may be user-defined and/or pre-defined.

A typical example of computer-implementation of a method is to perform the method with a system adapted for this purpose. The system may comprise a processor coupled to a memory and a graphical user interface (GUI), the memory having recorded thereon a computer program comprising instructions for performing the method. The memory may also store a database. The memory is any hardware adapted for such storage, possibly comprising several physical distinct parts (e.g. one for the program, and possibly one for the database).

FIG. 71 shows an example of the system, wherein the system is a client computer system, *e.g.* a workstation of a user.

The client computer of the example comprises a central processing unit (CPU) 1010 connected to an internal communication BUS 1000, a random access memory (RAM) 1070 also connected to the BUS. The client computer is further provided with a graphical processing unit (GPU) 1110 which is associated with a video random access memory 1100 connected to the BUS. Video RAM 1100 is also known in the art as frame buffer. A mass storage device controller 1020 manages accesses to a mass memory device, such as hard drive 1030. Mass memory devices suitable for tangibly embodying computer program instructions and data include all forms of nonvolatile memory, including by way of example semiconductor memory devices, such as EPROM, EEPROM, and flash memory devices; magnetic disks such as internal hard disks and removable disks; magneto-optical disks. Any of the foregoing may be supplemented by, or incorporated in, specially designed ASICs (application-specific integrated circuits). A network adapter 1050 manages accesses to a network 1060. The client computer may also include a haptic device 1090 such as cursor control device, a keyboard or the like. A cursor control device is used in the client computer to permit the user to selectively position a cursor at any desired location on display 1080. In addition, the cursor control device allows the user to select various commands, and input control signals. The cursor control device includes a number of signal generation devices for input control signals to system. Typically, a cursor control device may be a mouse, the button of the mouse being used to generate the signals. Alternatively or additionally, the client computer system may comprise a sensitive pad, and/or a sensitive screen.

The computer program may comprise instructions executable by a computer, the instructions comprising means for causing the above system to perform the method. The program may be recordable on any data storage medium, including the memory of the system. The program may for example be implemented in digital electronic circuitry, or in computer hardware, firmware, software, or in combinations of them. The program may be implemented as an apparatus, for example a product tangibly embodied in a machine-readable storage device for execution by a programmable processor. Method steps may be performed by a programmable processor executing a program of instructions to perform functions of the method by operating on input data and generating output. The processor may thus be programmable and coupled to receive data and instructions from, and to transmit data and instructions to, a data storage system, at least one input device, and at least one output device. The application program may be implemented in a high-level procedural or object-oriented programming language, or in assembly or machine language if desired. In any case, the language may be a compiled or interpreted language. The program may be a full installation program or an update program. Application of the program on the system results in any case in instructions for performing the method. The computer program may alternatively be stored and executed on a server of a cloud computing environment, the server being in communication across a network with one or more clients. In such a case a processing unit executes the instructions comprised by the program, thereby causing the method to be performed on the cloud computing environment.

**Claims**

1. A computer-implemented method for applying, to a given curve that results from a conversion of a corresponding subdivision curve defined by a base mesh into a computer-aided design (CAD) curve format, a CAD deformation operator configured to deform an input CAD object so as to create a contact geometrical relation with another CAD object, the method comprising:

- converting the given curve into a format readable by the CAD deformation operator;
- applying the CAD deformation operator to the converted given curve; and
- converting back the result of applying the CAD deformation operator into the CAD curve format.

2. The method of claim 1, wherein the given curve comprises unitary curves each pointed by an edge, and wherein converting the given curve comprises:

- concatenating given unitary curves of the given curve into one or more single NURBS curves.

3. The method of claim 2, wherein, the unitary curves of the given curve are G2 continuous, the concatenation being thereby deviation-free.

4. The method of claim 2 or 3, wherein converting back the result of applying the CAD deformation operator into the CAD curve format comprises:

- exploding the one or more NURBS curves each into unitary curves, the unitary curves resulting from the exploding corresponding to the given unitary curves.

5. The method of claim 4, wherein the number of unitary curves resulting from the exploding equals the number of given unitary curves.

6. The method of any one of claims 1 to 5, wherein the method further comprises, prior to the converting:

- detecting sharp vertices in the base-mesh;
- identifying corresponding sharp vertices in the given curve;
- splitting the given curve according to the identified sharp vertices so as to split the given curve into curves each bounded by either two sharp vertices or one sharp vertex and a boundary vertex,

the converting, applying and converting back being applied based on the curves resulting from the splitting.

7. The method of any one of claims 1 to 6, wherein the operator is one of:

- matching operation to a curve ;
- matching operation to a 3D point;
- matching operation to a surface border;
- partial fitting operation to another curve;
- partial fitting operation to one or several surfaces;
- partial fitting operation to a polygon; or
- G2 symmetry in regard to a symmetry plane.

8. The method of any one of claims 1 to 7, wherein the converting, applying and converting back are automated.

9. A computer program comprising instructions which, when executed by a computer system, cause the computer system to perform the method of any one of claims 1 to 8.

10. A computer-readable data storage medium having recorded thereon the computer program of claim 9.

11. A computer system comprising a processor coupled to a memory, the memory having recorded thereon the computer program of claim 9.

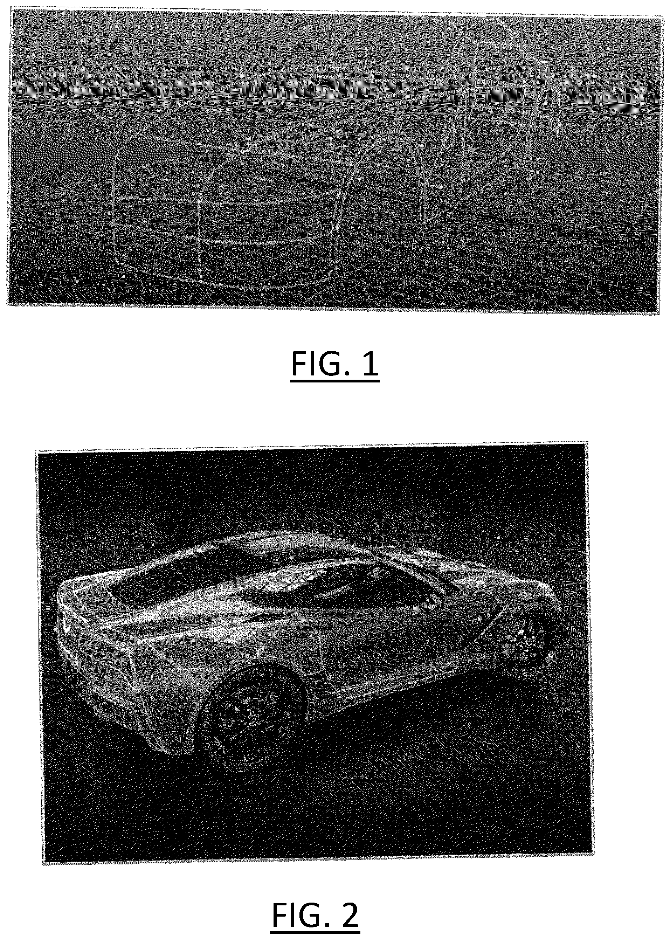

FIG. 1

FIG. 2

Bezier curves

FIG. 3

G2-Connected Bezier curves

FIG. 4

FIG. 5

FIG. 6

FIG. 7

FIG. 8

FIG. 9

FIG. 10

FIG. 11

FIG. 12A

FIG. 12B

FIG. 13

G0 continuity only

## FIG. 14

## FIG. 15A

## FIG. 15B

## FIG. 15C

**FIG. 16**

**FIG. 17**

FIG. 18

FIG. 19

Subd Base-mesh

Conversion

| Body |
| 1 |
| Wire |
| n |
| Edge |
| 1 |
| NurbsCurve or Bézier |

## FIG. 20

Base-mesh with 2 vertices

Vertex          Edge          Vertex

An order 2
Bezier should
be enough here

Body
↓
Wire          ViV
↓         ↗      ↖
Edge    Vertex   Vertex
┆         ┆        ┆
Bézier o2  Point   Point

Base-mesh with 3 vertices

Vertex          Topo Result
          Edge
Edge              Vertex
Vertex

Body
↓
Wire
↙    ↘
Edge    Edge
┆        ┆
Bézier o4/6  Bézier o4/6

To maintain the G2
connection, order 4
Bezier should be enough.
If more convenient, order
6 could be fine too

Base-mesh with 4 vertices

Vertex          Topo Result
          Edge
Edge         Vertex  Edge  Vertex
Vertex

To maintain the G2 connections,
order 6 Bezier should be
provided for the inner curve. 4 or
6 for border curves should be OK

Body
↓
Wire
↙    ↓    ↘
Edge  Edge  Edge
┆      ┆      ┆
Bézier o4/6  Bézier o6  Bézier o4/6

## FIG. 21

3 faces, same as 3 edges
of the input Subd Curve

No attraction

Smooth 100% attraction

Smooth 50% attraction

Extruded SubD Surface
with sharp 100% attraction

Order 4/6 Bézier
curve here

G0 continuity

Order 2 Bézier
curve here

Sharp 100% attraction

# FIG. 22

232

230

## FIG. 23

## FIG. 24

## FIG. 25

## FIG. 26

FIG. 27

FIG. 28

FIG. 29

FIG. 30

FIG. 31

FIG. 32

Object ◈ Modifiers ◈ Constraints ▬

Layer 0 > **Trace.3**

⊙ **Graphic Attributes**

Color  ● 100 %
Opacity

Brush  Pen ⌄

Size  10 mm

⊙ **Trace Subdivision**  ⋮

Complexity  5 pts

Dimension (mm) ⟲ 0   986.827   381.057
X   Y   Z

⊙ **Axis Definition**

# FIG. 33

# FIG. 34

FIG. 35

# FIG. 36

FIG. 37

## FIG. 38

FIG. 39

FIG. 40

## FIG. 41

428

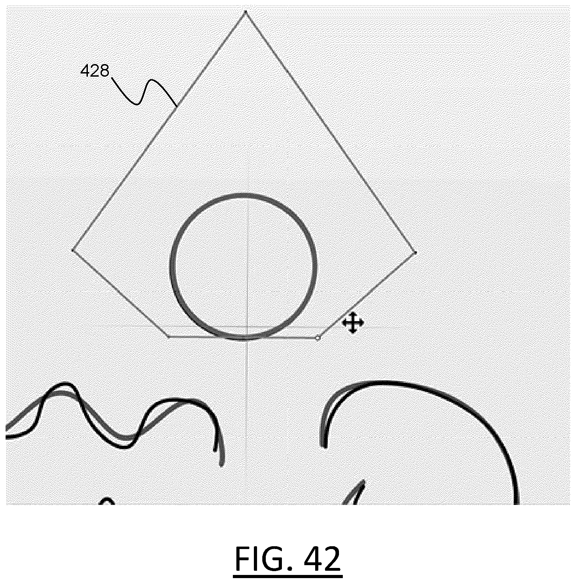

**FIG. 42**

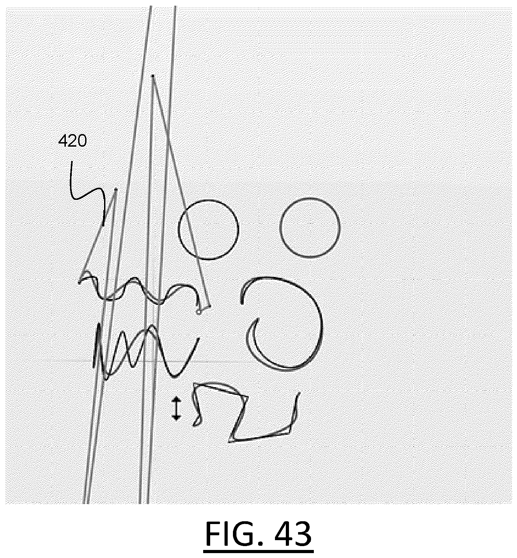

FIG. 43

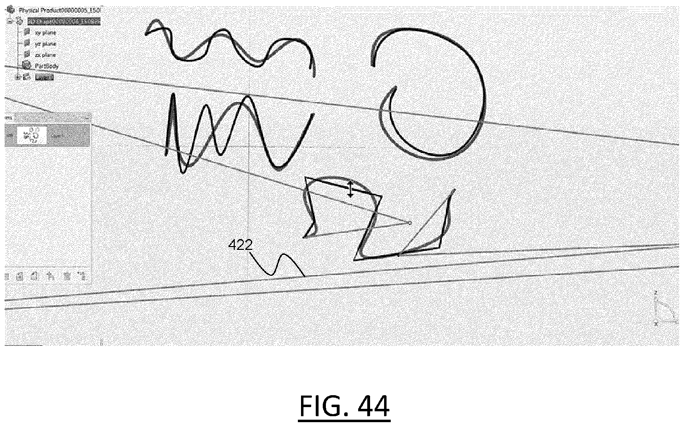

**FIG. 44**

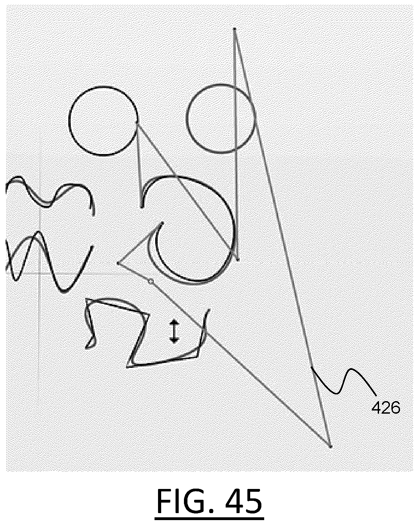

FIG. 45

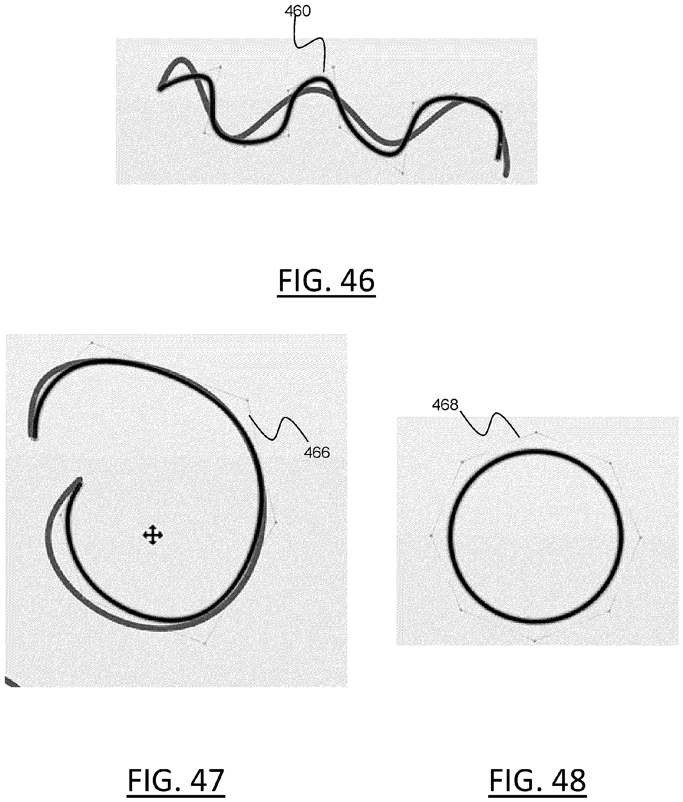

## FIG. 46

## FIG. 47

## FIG. 48

## FIG. 49

## FIG. 50

## FIG. 51

## FIG. 52

FIG. 53

FIG. 54

Body

↓

Wire

edge  edge  edge  edge  edge  edge  edge

↓  ↓  ↓  ↓  ↓  ↓  ↓

curve  curve  curve  curve  curve  curve  curve

## FIG. 55

Matched result

Target

This point must
remain stable

## FIG. 56

First retrieved sharp vertex

Parsing direction

Matched vertex

FIG. 57

First retrieved sharp vertex

Parsing direction

Matched vertex

FIG. 58

Topo vertices

## FIG. 59

## FIG. 60

Edge

EdgeCurve

Curve

Curve

Curve

Curve

Curve

Curve

## FIG. 61

Nurbs Curve

Nurbs Curve

## FIG. 62

G2 Match

G0 Match

Target

The conditions here are at least G0
to keep those vertices location stable

Target

## FIG. 63

Bezier

Bezier

Bezier

Bezier

Bezier

Bezier

Bezier

Bezier

## FIG. 64

edge

edge

edge

edge

edge

edge

edge

edge

Body

Wire

edge edge edge edge edge edge edge

curve curve curve curve curve curve curve

# FIG. 65

SubD Curve Deform Operation

Preprocess for
Sharpness

Concatenation of
all curves

Nurbs Deform

Computation of
SubD-Compliant
Topology

# FIG. 66

FIG. 67

FIG. 68

680

Propagation modes

686

## FIG. 69

FIG. 70

1000

1010　　CPU

1070　　RAM

1020　　Mass storage devices controler

1080　　Display

1030　　Hard drive

1090　　Haptic device

1050　　Network Adapter

1100　　Video RAM

1060　　Network

1110　　GPU

B
U
S

## FIG. 71

## EUROPEAN SEARCH REPORT

Application Number

EP 23 30 6680

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KONSTANTINOS GAVRIIL ET AL: "Computational Design of Cold Bent Glass Facades", ARXIV.ORG, CORNELL UNIVERSITY LIBRARY, 201 OLIN LIBRARY CORNELL UNIVERSITY ITHACA, NY 14853, 8 September 2020 (2020-09-08), XP081758229, DOI: 10.1145/3414685.3417843 * abstract * * section 3, par. 1 section 4, par. 1, 2 section 4.1.1, par. 1 section 8.3.1, par. 1 * * figures 1, 4, 5 * * the whole document * | 1-11 | INV. G06F30/12 G06F30/17 G06T17/20 G06T17/30 ADD. G06F111/04 G06F119/18 |
| X | YUE ZHANG ET AL: "Degenerations of NURBS curves while all of weights approaching infinity", ARXIV.ORG, CORNELL UNIVERSITY LIBRARY, 201 OLIN LIBRARY CORNELL UNIVERSITY ITHACA, NY 14853, 26 June 2017 (2017-06-26), XP080772497, DOI: 10.1007/S13160-018-0301-4 * abstract * * pg. 3, par. 1 pg. 8, penultimate paragraph; figures 14-16 * * the whole document * -----  -/-- | 1-11 | TECHNICAL FIELDS SEARCHED (IPC) G06F G06T |

The present search report has been drawn up for all claims

| Place of search | Date of completion of the search | Examiner |
|---|---|---|
| Munich | 21 March 2024 | Brandiska, Pavlina |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.................................................................................

& : member of the same patent family, corresponding
    document

EPO FORM 1503 03.82 (P04C01)

Europäisches
Patentamt

European
Patent Office

Office européen
des brevets

# EUROPEAN SEARCH REPORT

Application Number

**EP 23 30 6680**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DIAS A P ET AL: "High-order mortar-based contact element using NURBS for the mapping of contact curved surfaces", COMPUTATIONAL MECHANICS, SPRINGER, BERLIN, DE, vol. 64, no. 1, 24 November 2018 (2018-11-24), pages 85-112, XP036812553, ISSN: 0178-7675, DOI: 10.1007/S00466-018-1658-6 [retrieved on 2018-11-24] * abstract * * the whole document * | 1-11 | |
| X | CN 112 356 025 A (INST SOFTWARE CAS) 12 February 2021 (2021-02-12) * abstract * * claim 1 * * the whole document * | 1-11 | |

TECHNICAL FIELDS
SEARCHED     (IPC)

The present search report has been drawn up for all claims

| Place of search | Date of completion of the search | Examiner |
|---|---|---|
| Munich | 21 March 2024 | Brandiska, Pavlina |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 23 30 6680

This annex lists the patent family members relating to the patent documents cited in the above-mentioned European search report.
The members are as contained in the European Patent Office EDP file on
The European Patent Office is in no way liable for these particulars which are merely given for the purpose of information.

21-03-2024

| Patent document cited in search report | Publication date | Patent family member(s) | Publication date |
|---|---|---|---|
| CN 112356025 A | 12-02-2021 | NONE | |

EPO FORM P0459

For more details about this annex : see Official Journal of the European Patent Office, No. 12/82

**EP 4 535 212 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 23306674
- EP 1750228 A2
- EP 3327593 A
- EP 21306754

**Non-patent literature cited in the description**

- **CATMULL** ; **CLARK**. *Recursively Generated BSpline Surfaces On Arbitrary Topological Meshes*, 1978
- **CATMULL, CLARK**. *Recursively Generated BSpline Surfaces On Arbitrary Topological Meshes*, 1978
- **CATMULL**. A Subdivision Algorithm for Computer Display of Curved Surfaces. *PhD thesis*, 1974